# EUROPÄISCHE PATENTSCHRIFT

(11) **EP 2 045 626 B1**
(45) Veröffentlichungstag und Bekanntmachung des Hinweises auf die Patenterteilung: **26.06.2013**
(21) Anmeldenummer: 08105918.0
(22) Anmeldetag: 02.08.2002
(51) Int. Cl.: G01T 1/164, G01T 1/29

(54) **Vorrichtung für SPECT-Untersuchungen**
Device for SPECT investigations
Dispositif pour des examens SPECT

(30) Priorität: 31.08.2001 DE 10142421
(43) Veröffentlichungstag der Anmeldung: 08.04.2009
(62) Teilanmeldung aus: 02797567.1
(73) Patentinhaber: Forschungszentrum Jülich GmbH, 52425 Jülich (DE); Scivis GmbH, Wissenschaftliche Bildverarbeitung, 37095 Göttingen (DE)
(72) Erfinder: Schramm, Nils, 52070, Aachen (DE); Halling, Horst, 14552 Michendorf/Wilhelmshorst (DE); Ebel, Gernot, 37085, Göttingen (DE)
(74) Vertreter: Cohausz & Florack

(56) Entgegenhaltungen:
- US-A- 5 245 191
- US-A- 5 462 056
- US-B1- 6 392 235
- FORMICONI R ET AL: "Theoretical Determination of the Collimator Geometrical Transfer Function for the Reconstruction of SPECT Data" IEEE TRANSACTIONS ON NUCLEAR SCIENCE, IEEE SERVICE CENTER, NEW YORK, NY, US, Bd. 46, Nr. 4, 1. August 1999 (1999-08-01), Seiten 1075-1080, XP011088471
- PARETO D ET AL: "Geometrical response modeling in fan-beam collimators-a numerical simulation" IEEE Transactions on Nuclear Science IEEE USA, Bd. 49, Nr. 1, Februar 2002 (2002-02), Seiten 17-24, XP002553755 ISSN: 0018-9499
- WILSON* D W ET AL: "Reconstruction of Two- and Three-Dimensional Images from Synthetic-Collimator Data" IEEE TRANSACTIONS ON MEDICAL IMAGING, IEEE SERVICE CENTER, PISCATAWAY, NJ, US, Bd. 19, Nr. 5, 1. Mai 2000 (2000-05-01), XP011035982 ISSN: 0278-0062
- IVANOVIC M ET AL: "Multi-pinhole collimator optimization for high resolution SPECT imaging" NUCLEAR SCIENCE SYMPOSIUM, 1997. IEEE ALBUQUERQUE, NM, USA 9-15 NOV. 1997, NEW YORK, NY, USA,IEEE, US, 9. November 1997 (1997-11-09), Seiten 1097-1101, XP010275634 ISBN: 0-7803-4258-5

## Beschreibung

Die Erfindung betrifft eine Vorrichtung sowie ein Verfahren zur Tomographie, insbesondere zur Einzelgammaquanten-Tomographie (SPECT).

Die Einzelphotonen-Tomographie bezieht sich auf ein Verfahren nebst zugehörigen Vorrichtungen zur dreidimensionalen Darstellungen von Radiopharmaka, die in ein Objekt gebracht wurden. Als Objekt können Menschen oder Tiere vorgesehen sein. Die in das Objekt gebrachten Radiopharmaka senden Gammaquanten. Die Gammaquanten werden von der Vorrichtung erfasst und ausgewertet. Als Ergebnis der Auswertung wird die Lage, also die räumliche Verteilung der Radiopharmaka im Objekt erhalten. Die Lage der Radiopharmaka erlaubt wiederum Rückschlüsse auf das Objekt, so zum Beispiel auf eine Verteilung von Gewebe im Objekt.

Eine bekannte Vorrichtung zur Durchführung einer EinzelGammaquanten-Tomographie umfasst eine Gammakamera und einen vorgeschalteten Kollimator. Beim Kollimator handelt es sich im allgemeinen um eine Bleiplatte mit einer Vielzahl von senkrecht durch die Platte führenden Kanälen. Durch das Vorsehen der Kanäle wird sichergestellt, dass einerseits nur senkrecht einfallende Gammaquanten erfasst werden und andererseits eine ortsauflösende Messung möglich ist. Die Kamera wird samt Kollimator um das Objekt herum verfahren. Hierdurch erhält man eine Vielzahl von Ortsinformationen. Es handelt sich dabei um sogenannte Projektionsaufnahmen. Aus den gewonnenen Ortsinformationen rund um das Objekt herum kann anschließend die Lage der Radiopharmaka im Objekt ermittelt werden.

Um von den Gammaquanten verursachte Streustrahlung ausblenden zu können, wird im allgemeinen noch eine Energieinformation benötigt. Die Kamera ist daher in der Regel so beschaffen, dass mit ihr sogleich die Energie der einfallenden Gammaquanten ermittelt werden kann.

Streustrahlung weist grundsätzlich eine geringere Energie auf im Vergleich zur eigentlichen Messstrahlung. Es kann so Streustrahlung ausgeblendet werden, indem Gammaquanten mit niedriger Energie nicht berücksichtigt werden. Eine Obergrenze der Energie der Gammaquanten festzulegen kann ebenfalls von Interesse sein, um Hintergrundstrahlung ausblenden zu können.

Das vorbeschriebene Verfahren bzw. die vorbeschriebene Vorrichtung gehört zum allgemeinen Fachwissen, da solche Verfahren und Vorrichtungen seit mehr als dreißig Jahren eingesetzt werden.

Die EinzelGammaquanten-Tomographie (SPECT) und die Positronen-Emissionstomographie (PET) stellen Instrumente zur quantitativen Darstellung räumlicher Radiotracer-Verteilungen in vivo dar. Außer in der Humanmedizin lassen sich diese Verfahren in der pharmakologischen und präklinischen Forschung zur Entwicklung und Evaluation neuartiger Tracer-Verbindungen einsetzen. Während in der PET heute diverse Systeme zur Untersuchung kleiner Labortiere zur Verfügung stehen, hat es im Bereich der SPECT entsprechende Entwicklungen bisher nicht oder in nur unzureichendem Maße gegeben, und das obwohl TC-99m und I-123-markierte Radiopharmaka in der Nuklearmedizin eine ungleich höhere Bedeutung haben als die PET-Nuklide.

Mit einem hochauflösenden und hochsensitiven Tier-SPECT ergäbe sich für die präklinische Forschung der Vorteil eines tierschonenden Verfahrens, mit dem sich aussagekräftige Studien dynamisch und wiederholbar an einem Individuum durchführen ließen. Dies wird dadurch begünstigt, dass sich bei den oben genannten Radioisotopen extrem hohe spezifische Aktivitäten erzielen lassen (ca. Faktor 100 gegenüber PET-Nukliden), welche für störungsfreie in vivo Messungen unerlässlich sind (geringe Massendosis). Hierzu sind begleitende Entwicklungen entsprechender Markierungsmethoden durchzuführen.

Um die Ortsauflösung gegenüber dem eingangs genannten Stand der Technik zu verbessern, wird ein Pinhole-Kollimator bei der EinzelGammaquanten-Tomographie eingesetzt. Ein Pinhole-Kollimator zeichnet sich durch ein einzelnes Loch (Pinhole) aus, durch das die Gammaquanten hindurchtreten. Befindet sich das Objekt näher am Pinhole-Kollimator als die Oberfläche einer Gammakamera bzw. eines Detektors, so wird hierdurch schliesslich eine vergrösserte Ortsauflösung erreicht. Durch den Pinhole-Kollimator hindurch treten die Gammaquanten nicht ausschliesslich senkrecht. Stattdessen treten sie kegelförmig ein und wieder aus. Da der hinter dem Pinhole-Kollimator liegende Kegel grösser ist als der Kegel vor dem Pinhole-Kollimator, wird im Ergebnis eine Verbesserung der Ortsauflösung im Vergleich zum eingangs genannten Stand der Technik erreicht.

In einem Pinhole-Kollimator ist eine kleine Durchtrittsöffnung bzw. ein kleines Loch vorzusehen, durch das die Gammaquanten hindurchtreten, um eine gute Ortsauflösung zu erhalten. Je kleiner ein Loch jedoch ist, desto weniger Gammaquanten treten durch dieses Loch hindurch. Mit kleiner werdendem Loch sinkt daher nachteilhaft die Sensitivität der Vorrichtung. Sensitivität ist definiert als das Verhältnis von gemessener Zählrate zur im Objekt vorhandenen Aktivität.

Wird die Sensitivität zu gering, so ist schliesslich die Durchführung einer EinzelGammaquanten-Tomographie nicht mehr möglich.

Des Weiteren ist aus der Druckschrift "Reconstruction of Two- and three-Dimensional Images from Synthetic-Collimator Data" (Wilson et al.) ein Kollimations-Verfahren mit einem synthetischen Kollimator mit einer Multi-Pinhole Apertur und einem hochauflösenden Detektor bekannt. Dabei wird das Problem durch Multiplexing vermindert, indem Projektionen an verschiedenen Pinhole-Detektor Distanzen aufgenommen werden. Projektionen mit wenig Multiplexing werden bei kleinen Pinhole-Detektor Distanzen aufgenommen und Projektionen mit hoher Auflösung werden bei größeren Pinhole-Detektor Distanzen aufgenommen

Aufgabe der Erfindung ist die Schaffung einer Vorrichtung nebst zugehörigem Verfahren der eingangs genannten Art, mit der hochauflösend und hochsensitiv gemessen werden kann.

Die Aufgabe der Erfindung wird durch eine Vorrichtung mit den Merkmalen des ersten Anspruchs sowie durch ein Verfahren mit den Merkmalen des Nebenanspruchs gelöst. Vorteilhafte Ausgestaltungen ergeben sich aus den Unteransprüchen.

Die anspruchsgemässe Vorrichtung umfasst einen Multi-Pinhole-Kollimator nebst einem Detektor zur Erfassung der Gammaquanten, die durch den Multi-Pinhole-Kollimator hindurchtreten. Der Kollimator weist also eine Mehrzahl an Durchtrittsöffnungen auf. In einer Ausgestaltung der Erfindung ist der Detektor so beschaffen, dass dieser auch die Energie der auftreffenden Gammaquanten zu bestimmen vermag.

Da der Kollimator mehrere Löcher aufweist, steigt die Sensitivität der Vorrichtung entsprechend an. Der Einsatz eines Pinhole-Kollimators hat gegenüber dem Einsatz solcher Kollimatoren, mit denen nur senkrecht einfallende Strahlen erfasst werden, den Vorteil der hohen Ortsauflösung. Somit steht eine Vorrichtung mit guter Ortsauflösung und guter Sensitivität zur Verfügung.

Während des Betriebes der Vorrichtung befindet sich das Objekt näher am Multi-Pinhole-Kollimator als die Kamera- bzw. Detektoroberfläche, um eine gute Ortsauflösung zu erzielen. Bei der Vorrichtung befindet sich die Halterung für das Objekt (Patientenliege) daher näher am Multi-Pinhole-Kollimator als die Kamera bzw. der Detektor.

Die Abstände der einzelnen Durchtritte oder Löcher im Multi-Pinhole-Kollimator sind vorzugsweise so gewählt, dass sich die Kegel, die auf der Kamera auftreffen, allenfalls teilweise überschneiden. Zur Erzielung einer guten Ortsauflösung sowie guter Sensitivität ist es vorteilhaft, Überschneidungsbereiche zuzulassen. Diese betragen in einer Ausgestaltung der Erfindung nicht mehr als 30%, vorzugsweise bis zu 70% der Gesamtfläche eines Kegels, der durch die Gammaquanten gebildet wird, die durch ein Loch des Multi-Pinhole-Kollimators hindurchtreten.

In der herkömmlichen Loch-Tomographie (Pinhole-Tomographie) liegt das Lochzentrum auf der Mittensenkrechten des Detektors. Ferner steht die Loch-Achse, d. h. die Symmetrieachse des Kollimatorlochs, senkrecht zum Detektor. Es wird dann ein Rekonstruktionsverfahren verwendet, bei dem davon ausgegangen wird, dass das Gammaquant, welches vom Zentrum des Objekts auf die Kamera fällt, mit der Kameraoberfläche einen rechten Winkel bildet. Die Grundfläche des Kegels, die auf der Kamera abgebildet wird, ist dann grundsätzlich kreisförmig.

Diese Situation ist beim Einsatz eines Multi-Pinhole-Kollimators vielfach nicht der Fall. Es wird daher in einer Ausgestaltung der Erfindung ein Rekonstruktionsverfahren bereit gestellt, welches die abweichenden Bedingungen berücksichtigt. Fällt ein vom Zentrum des Objekts stammendes Gammaquant nicht mehr senkrecht auf die Oberfläche der Kamera bzw. des Detektors auf, so wird kein kreisförmiger Kegel (idealisierter Zustand) auf der Kameraoberfläche abgebildet. Stattdessen bildet sich der Kegel grundsätzlich in Form einer Ellipse auf der Kamera ab. Erfindungsgemäß wird dieses Problem gelöst, indem ein iteratives Rekonstruktionsverfahren eingesetzt wird. Ausgangspunkt des iterativen Rekonstruktionsverfahrens ist eine angenommene Verteilung im Objekt und zwar in der Regel eine räumliche Verteilung. Es wird dann berechnet, welches Messergebnis die angenommene Verteilung erzielen würde. Das berechnete Ergebnis wird mit dem tatsächlich gemessenen verglichen. Anschließend wird eine neue geänderte Verteilung genommen. Wiederum wird das auf der Kamera abgebildete Ergebnis dieser neuen Verteilung berechnet. Es wird erneut verglichen. Es wird festgestellt, ob die neue Verteilung dem gemessenen Ergebnis besser entspricht. Auf diese Weise wird nach Durchführung hinreichend vieler Schritte eine Verteilung ermittelt, deren berechnetes Ergebnis mit dem tatsächlichen Ergebnis (Messergebnis) hinreichend gut übereinstimmt. Das iterative Rekonstruktionsverfahren ist insbesondere dann beendet, wenn mit einer vorgegebenen Genauigkeit das berechnete Ergebnis mit dem gemessenen übereinstimmt. Das Iterationsverfahren umfasst also eine sogenannte Vorwärtsprojektion, also die Berechnung des Ergebnisses einer angenommenen Verteilung.

Das iterative Verfahren weist ferner den Vorteil auf, dass Überlappungsbereiche der auf der Kamera- bzw. Detektoroberfläche abgebildeten Kegel berechnet und mit dem tatsächlichen Ergebnis verglichen werden können. Es ist daher auch aus diesem Grund anderen Rekonstruktionsverfahren vorzuziehen. Es ist also so möglich, Überlappungsbereiche zuzulassen und so zu guten Ortsauflösungen zu gelangen.

In einer weiteren Ausgestaltung der Erfindung umfasst der Mulit-Pinhole-Kollimator eine Platte, die aus Wolfram und Iridium gefertigt ist. Diese Materialien besitzen einen besseren Schwächungskoeffizienten gegenüber Gammaquanten im Vergleich zu Blei. Iridium ist unter den genannten Materialien am besten geeignet, um Gammaquanten zu schwächen. Iridium ist jedoch sehr teuer. Daher wird aus Kostengründen Wolfram an den Stellen eingesetzt, bei denen die Anforderungen an das Schwächungsverhalten weniger groß sind. Aus Iridium werden die Teile der Platte gefertigt, bei denen die Anforderungen an die Schwächung von Gammaquanten besonders groß sind. Es handelt sich dabei insbesondere um die Bereiche der Platte, die an die Löcher angrenzen.

Ein Loch in der Platte mündet vorteilhaft von beiden Seiten trichterförmig in die Platte ein. Hier sind die Anforderungen an die Schwächung besonders groß und zwar insbesondere an der Lochwandung. Daher sind die Trichterwände bevorzugt aus Iridium gefertigt. Die Platte ist dann typischerweise 3 bis 10 mm dick.

Gammaquanten, die vom Inneren des Objektes ausgehen, werden in der Regel gewebeabhängig geschwächt. Gemäß Stand der Technik wird zur Berücksichtigung dieser Schwächung bei der Auswertung von einem homogenen Schwächungskoeffizienten ausgegangen, der dem Schwächungskoeffizienten von Wasser entspricht. Daneben ist die Schwächung von den Umrissen des Objektes abhängig. In einer Ausgestaltung der Erfindung wird im Rahmen der Auswertung der äußere Umriss des Objektes ermittelt und die Schwächung in Abhängigkeit vom Umriss kalkuliert. Auf diese Weise werden weiter verbesserte Ergebnisse erhalten.

Maß für den äußeren Umriss des Objektes ist die Compton-Streustrahlung. In einer Ausgestaltung der Erfindung wird daher die Compton-Streustrahlung zum Beispiel in einem sogenannten Compton-Fenster gemessen. Im Rekonstruktionsverfahren wird die Compton-Streustrahlung berücksichtigt und hieraus der Umriss des Objektes ermittelt.

Trifft ein Gammaquant auf eine Kamera bzw. den Detektor auf, so wird der Ort des Auftreffens mit einer kamera- oder detektortypischen Ungenauigkeit gemessen. In einer weiteren Ausgestaltung des Verfahrens wird bei der Vorwärtsprojektion, die dem iterativen Rekonstruktionsverfahren zugrunde liegt, die Abbildungseigenschaft, also die kamera- oder detektortypische Ungenauigkeit bei der Auswertung berücksichtigt. Wiederum gelingt die Berücksichtigung der Messungenauigkeit durch ein Iterationsverfahren der vorgenannten Art zuverlässig.

Befindet sich eine im Objekt befindliche strahlende Quelle verhältnismäßig weit von dem Multi-Pinhole-Kollimator entfernt (also in einem Bereich des Objekts, der besonders weit weg vom Kollimator liegt), so nimmt die Sensitivität ab. In einer Ausgestaltung des Rekonstruktionsverfahrens wird bei der Vorwärtsprojektion diese abnehmende Sensitivität berücksichtigt.

Das Abbildungsverhalten der Kamera bzw. des Detektors hängt ebenfalls von der Entfernung ab, die zwischen der strahlenden Quelle und dem Multi-Pinhole-Kollimator besteht. Dieses sich entfernungsabhängig ändernde Abbildungsverhalten wird in einer Ausgestaltung des Verfahrens ebenfalls iterativ berücksichtigt.

Nachfolgend werden einschlägige Programmteile für ein Iterationsverfahren angegeben, welches die vorgenannten erfindungsgemäßen Schritte abzuarbeiten vermag. Die Programme umfassen die nachfolgend genannten Eingabe-Parameter. Ferner werden typische Werte solcher Eingabeparameter angegeben. Der Begriff "Pinhole" wird synonym für den Begriff "Loch" (des Multi-Pinhole-Kollimators) verwendet.

Soweit die Berechnung der Kontur bzw. des Umrisses des Objekts betroffen ist, wird die Berechnung der Objektkontur in einer Ausführungsform in der "nullten" Iteration vorgenommen. Eine eigentlich die Bildqualität degradierende Eigenschaft der Comptonstreuung wird hierfür ausgenutzt: die richtungsfalsch detektierten Gammaquanten.

Richtungsfalsch detektierte Gammaquanten stellen einen Untergrund in den Projektionen dar, der nachhaltig die Bildqualität verschlechtert. Sie können jedoch auch von Nutzen sein. Sie bewirken, dass in praktisch allen klinischen Fällen die gesamte Ausdehnung des Patienten in den Projektionen erscheint. Auch wenn sich ein Tracer, also ein Radiopharmakon sehr spezifisch an einem eng umgrenzten Organ anlagern sollte, so scheinen dennoch auch Quanten von allen anderen zur Abbildung gebrachten Bereichen des Patienten zu stammen. Tatsächlich sind dies Quanten, die ihren Ursprung in dem eng umgrenzten Organ haben, aufgrund der Comptonstreuung jedoch scheinen sie den ganzen Patienten zu "illuminieren". Dieser Umstand wird ausgenutzt, um die Objektkontur zu berechnen.

Die Berechnung erfolgt mehrstufig:
1) Erstellung "binärer" Projektionen. Sie stellen eine Vereinfachung der eigentlichen Projektionen dar, insofern, dass bei ihnen jeder Pixelinhalt größer Null auf Eins gesetzt wird.
   Wesentlich dafür ist eine benutzergeführte Schwellsetzung, die nach Schlüssigkeit die Projektion des eigentlichen Untersuchungsobjektes, des Patienten also, vom Hintergrund separiert. Die Berechnung der Schwelle orientiert sich an einem gemittelten Maximum, das aus sämtlichen Projektionen gebildet wird.
2) Rückprojektion der binären Projektionen in den Objektraum.
3) Anhand der "Vielfachheit" der Voxel (kleines meist kubisches Volumenelement), d.i. die Häufigkeit, mit der ein Voxel unter der jeweiligen Kollimatorgeometrie über alle Winkel von den Projektionen gesehen wird, setzt eine (für die jeweilige Geometrie heuristisch ermittelte) Schwelle fest, welche Voxel in allererster Näherung zum Körperbinnenraum gehören. (Die Begrenzung des Körperbinnenraumes ist die Körperkontur.)
4) Mehrmalige Faltung mit 3d-Faltungskern
5) Wiederholung Punkt 3
6) Zweimaliges Durchlaufen von:
   a) 3d-Faltung
   b) Hinzunahme der Voxel, in die etwas hineingefaltet wurde, zum Körperinnenraum.

| Eingabe-Aufforderung | Bedeutung |
|---|---|
| Projektionen (float): maus.prj | Die gemessenen Projektionen |
| Breite der Proj. [pix]: 266 | Transversale Dimension |
| Schichten in Proj. [pix]: 193 | Axiale Dimension |
| Anzahl der Winkel : 60 | Anzahl der Projektionen |
| Pixelgroesse in Proj. [mm]: 2 | Größe der Projektionspixel |
| Projektionen glaetten (nein=0/ja-1): 1 | Glättung der gemessenen Projektionen |
| Abstand RotAchse/Bildebene [mm]: 155 | Abstand Bildebene zu Rotationsachse |
| Name des Aperturmusters (text): apertur.txt | Name der Aperturdatei (siehe unten) |
| Dicke des Kristalls [mm]: 10 | Dicke des Szintillators |
| Absorption des Kristalls [1/cm]: 1.173 | Absorptionskoeffizient Kristall |
| Intrinsische Aufloesung [mm]: 3.3 | Intrinsische Auflösung der Kamera |
| Abs. Intensitaet des Gammas [%] : 90 | Abs. Intensität der Gammalinie |
| Startverteilung (float): maus.sta | Startverteilung der Rekonstruktion |
| Breite der Rekon. [pix]: 112 | Transversale Dimension |
| Schichten der Rekon. [pix]: 262 | Axiale Dimension |
| Voxelgroesse in Rekon. [mm]: 0.4 | Größe der Objektvoxel |
| Zahl der Iterationen: 30 | Anzahl der Iterationen |
| Volumen glaetten (nein=0/ja=1): 1 | Glättung der Volumendaten |
| Abbildungsfkt. voxelweise (nein=0/jasl)?: 0 | PSF voxelweise berücksichtigen oder mit mittlerer PSF falten? |
| Abw. vom Original (nein=0/ja=1)?: 0 | Abweichung zum original bestimmen? |
| Stammname des Outputs: maus | Namensstamm der Output-Dateien |
| Speichern alle?: 5 | Zwischenergebnisse speichern? |

### Aufbau der Aperturdatei

Eine Aperturdatei hat typischerweise folgenden Aufbau:

| 7 | | | | | | | | |
|---|---|---|---|---|---|---|---|---|
| | 45 | 18.435 | 66.503 | 1.5 | 60 | 22.278 | 21.53 | 27.9 |
| | 45 | -18.435 | 55.858 | 1.5 | 60 | -22.278 | 26.164 | 27.9 |
| | 45 | 36.871 | 13.306 | 1.5 | 60 | 39.33 | -6.8974 | 27.9 |
| | 45 | 0 | 2.6613 | 1.5 | 60 | 0 | -1.3859 | 27.9 |
| | 45 | -36.871 | -7.9839 | 1.5 | 60 | -39.33 | 4.1513 | 27.9 |
| | 45 | 18.435 | -50.535 | 1.5 | 60 | 22.278 | -28.355 | 27.9 |
| | 45 | -18.435 | -61.181 | 1.5 | 60 | -22.279 | -23.889 | 27.9 |

Beim ersten Eintrag handelt es sich um die Anzahl der Löcher. Jede folgende Zeile beschreibt ein Pinhole. Die Bedeutung der Einträge ist folgende:

| Spalte | Bedeutung |
|---|---|
| 1 | x-Koordinate des Pinholemittelpunkte, d.h. Abstand des Pinholes |
| | von der Rotationsachse in mm |
| 2 | y-Koord. des Pinholes, d.h. transversale Auslenkung des PH |
| 3 | z-Koord. des Pinholes, d.h. axiale Auslenkung den PH |
| 4 | Innendurchmesser des doppeltrichterförmigen Pinholes |
| 5 | öffnungswinkel des Pinholes in Grad |
| 6 | Seitlicher, d.h. transversaler Neigungswinkel der Pinhole-Achse |
| 7 | Axialer Neigungswinkel der PH-Achse |
| 8 | Schwächungskoeffizient des Aperturmaterials in 1/cm |

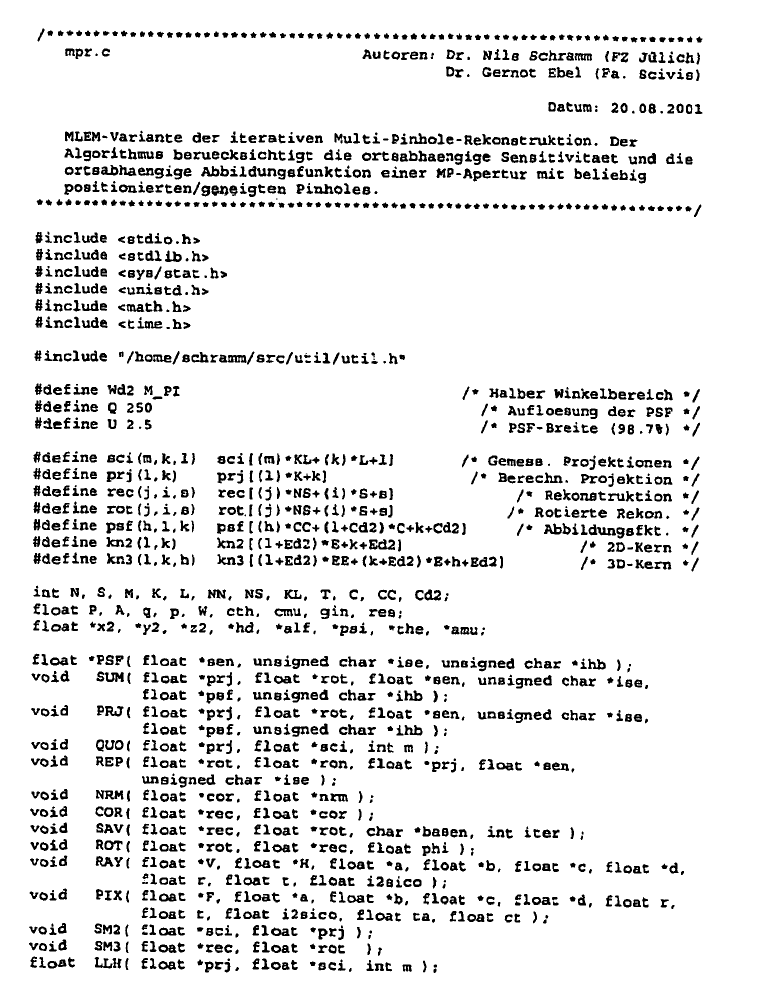

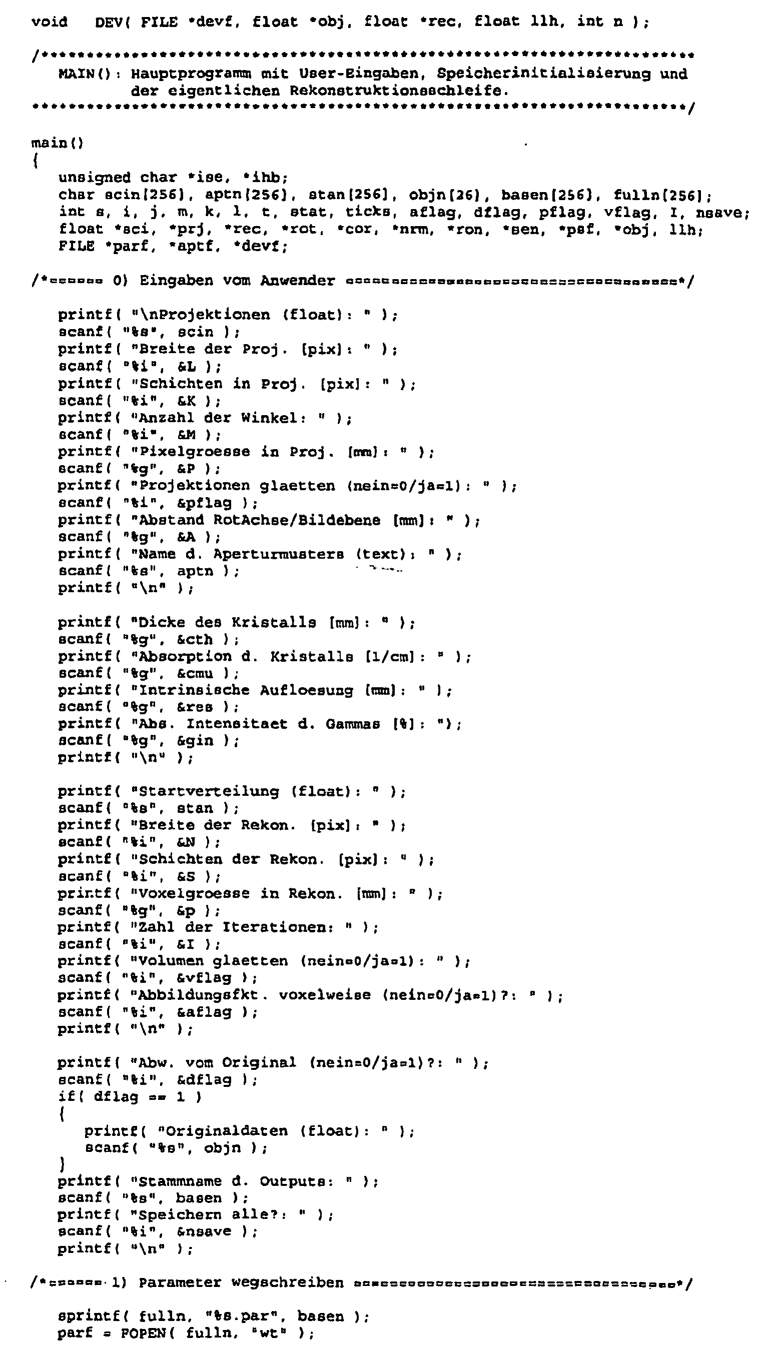

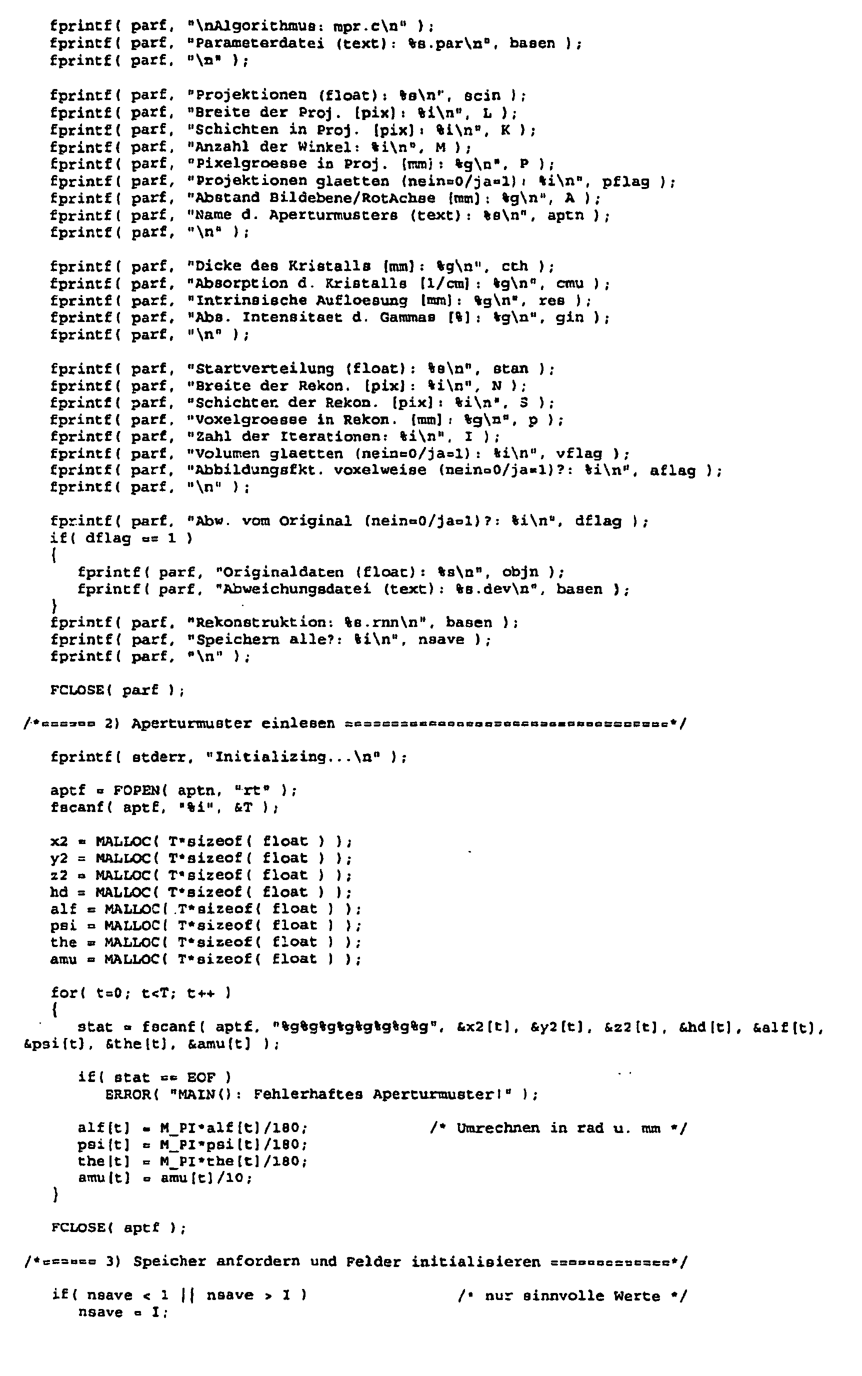

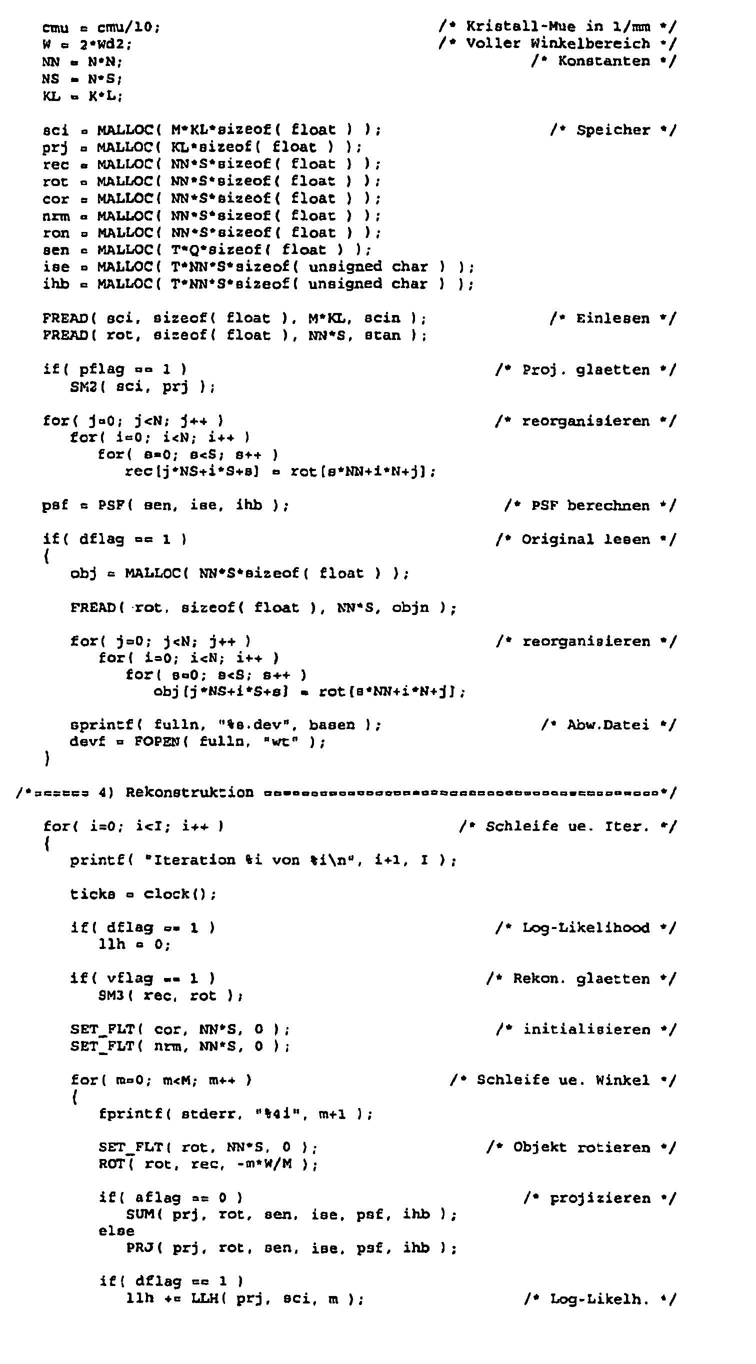

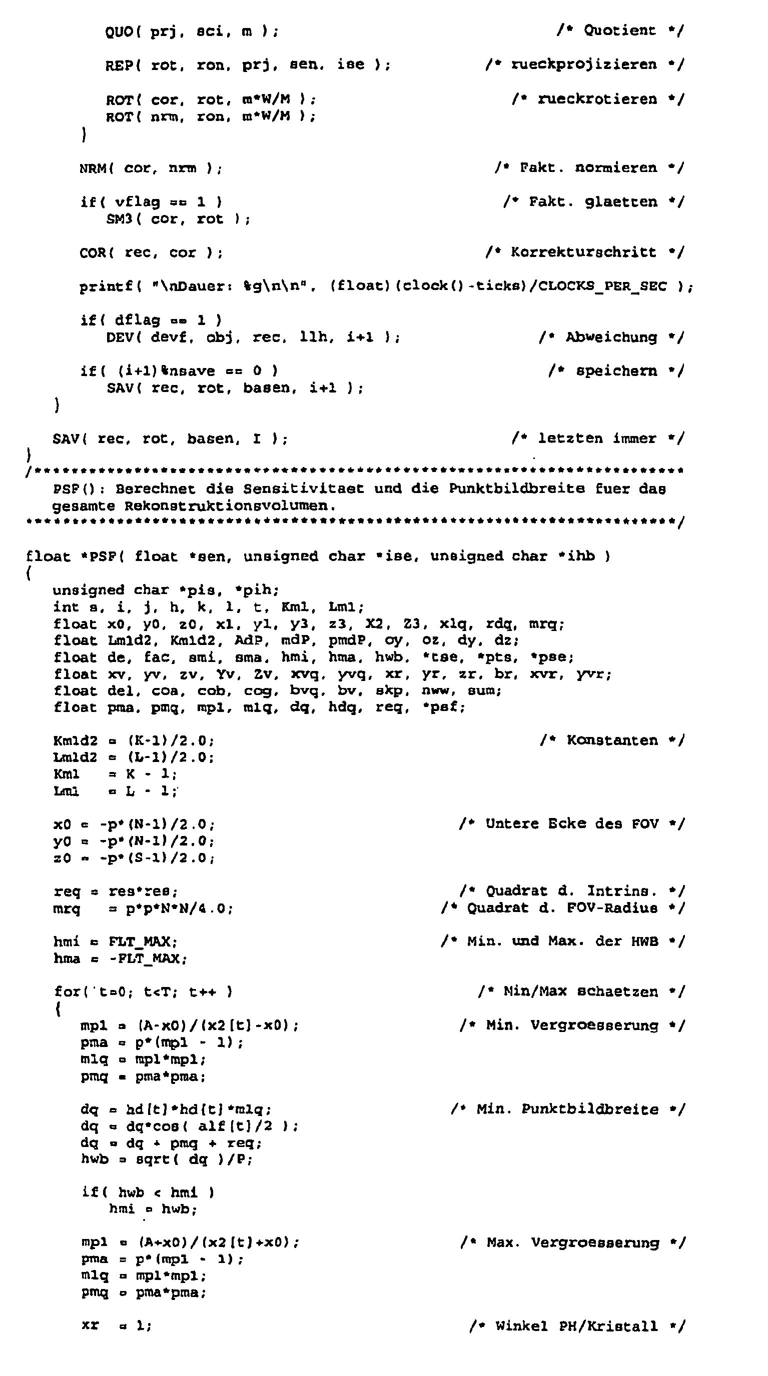

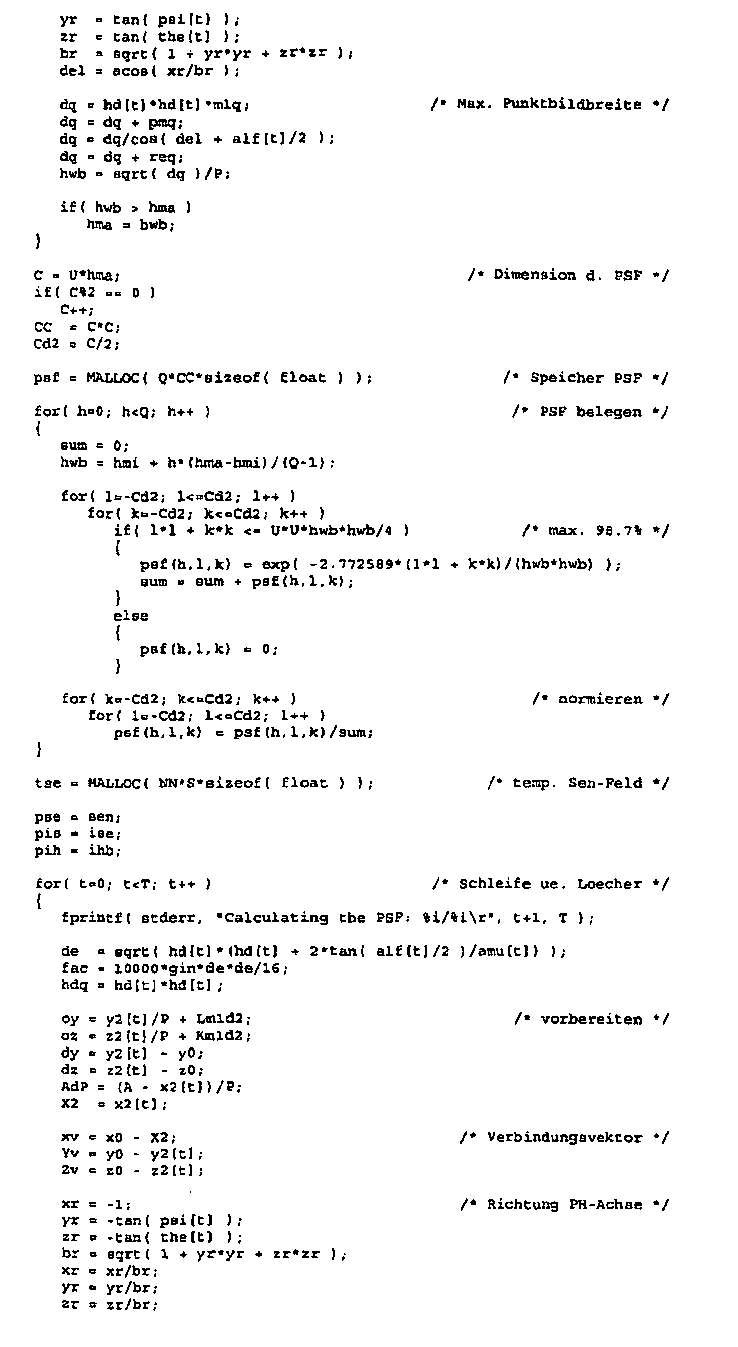

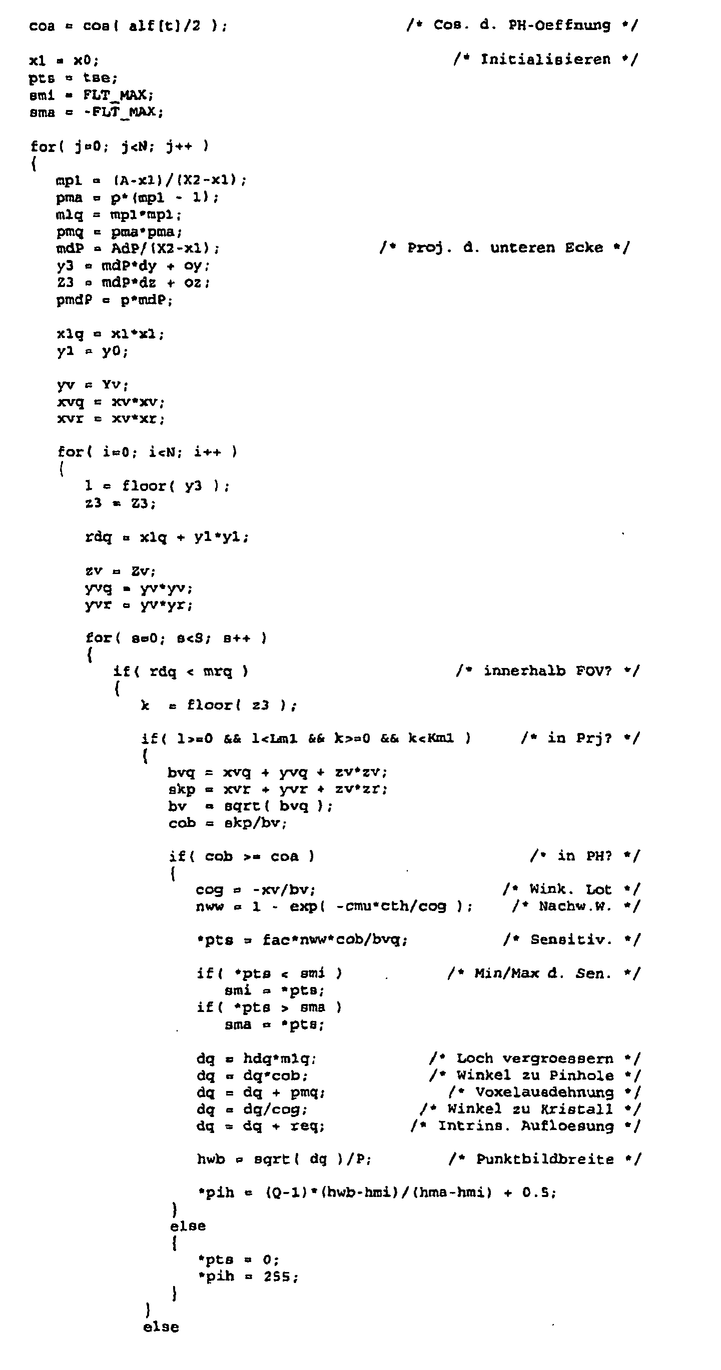

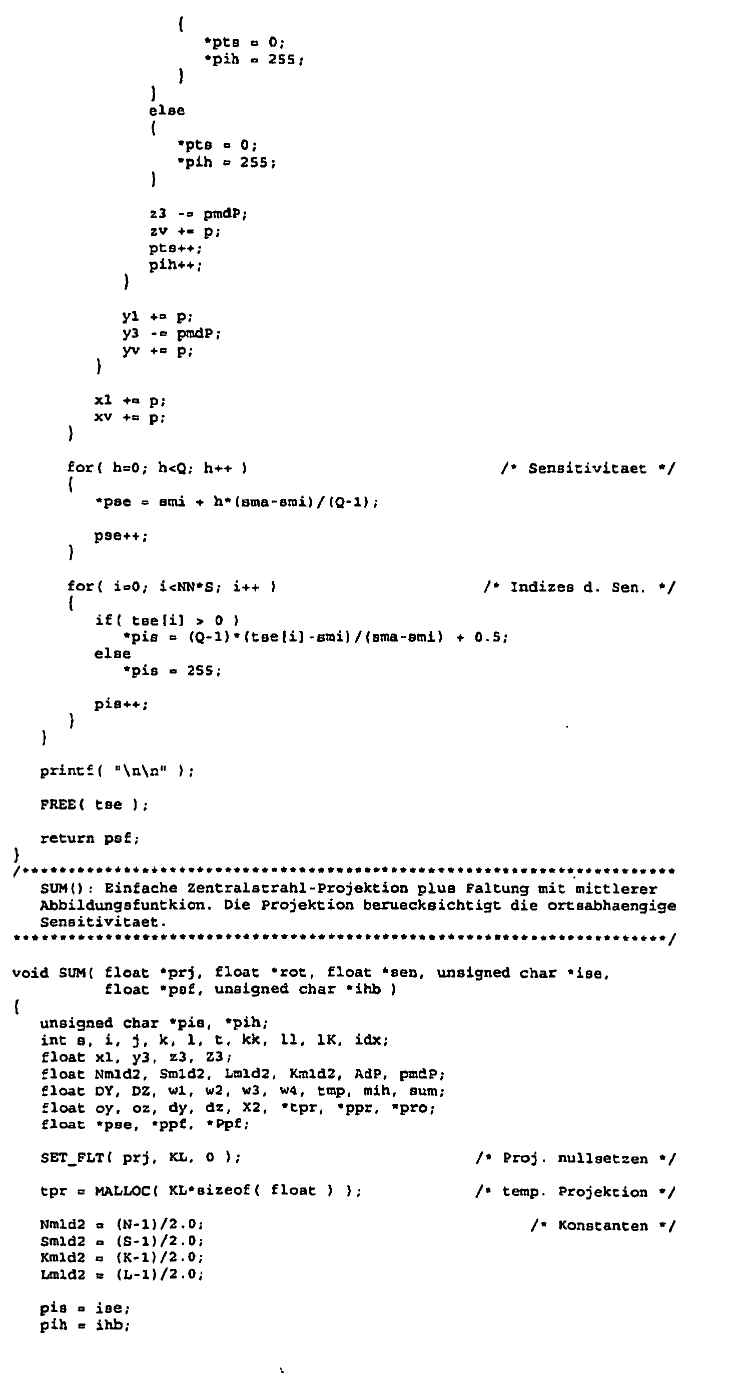

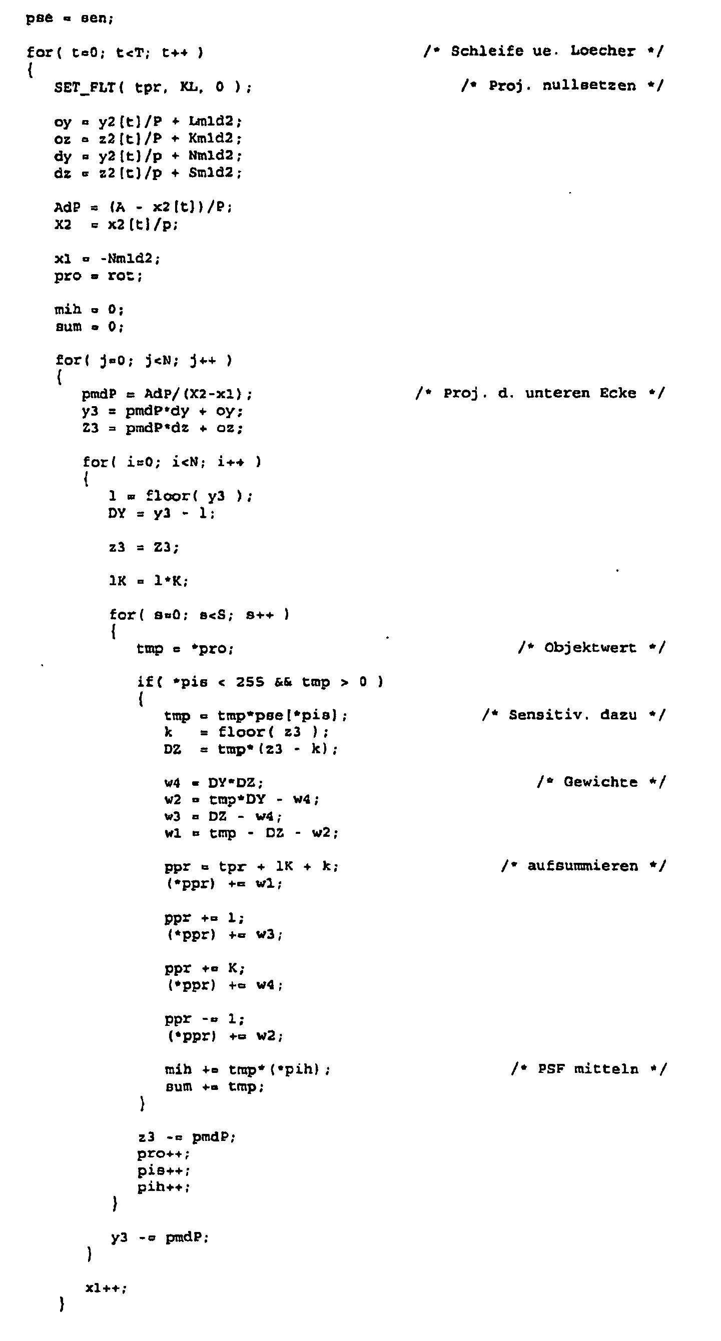

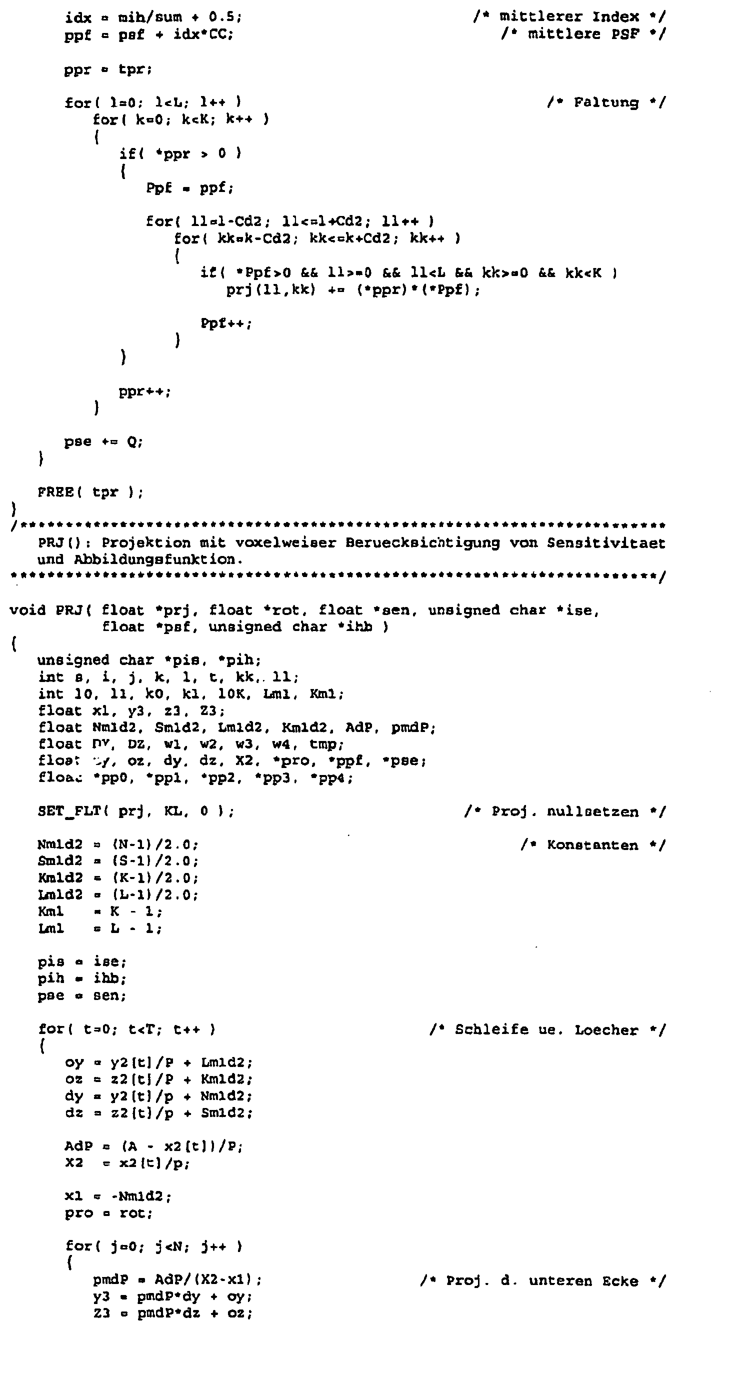

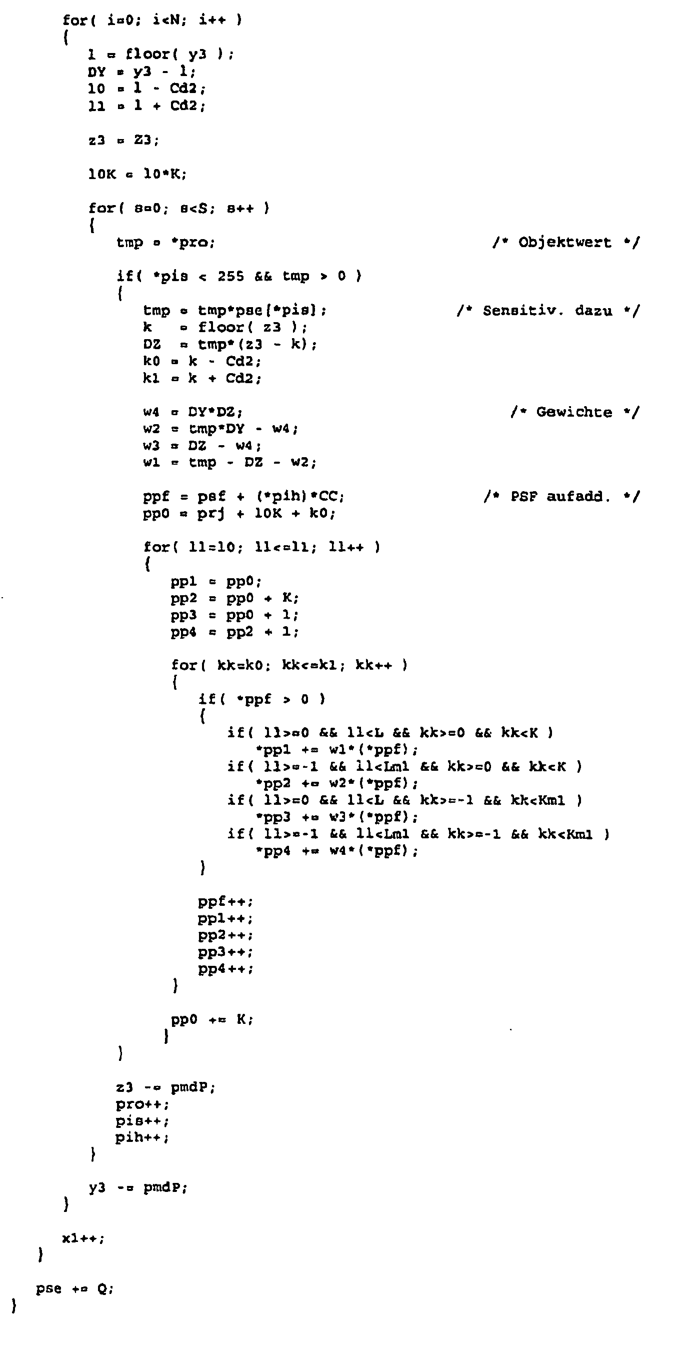

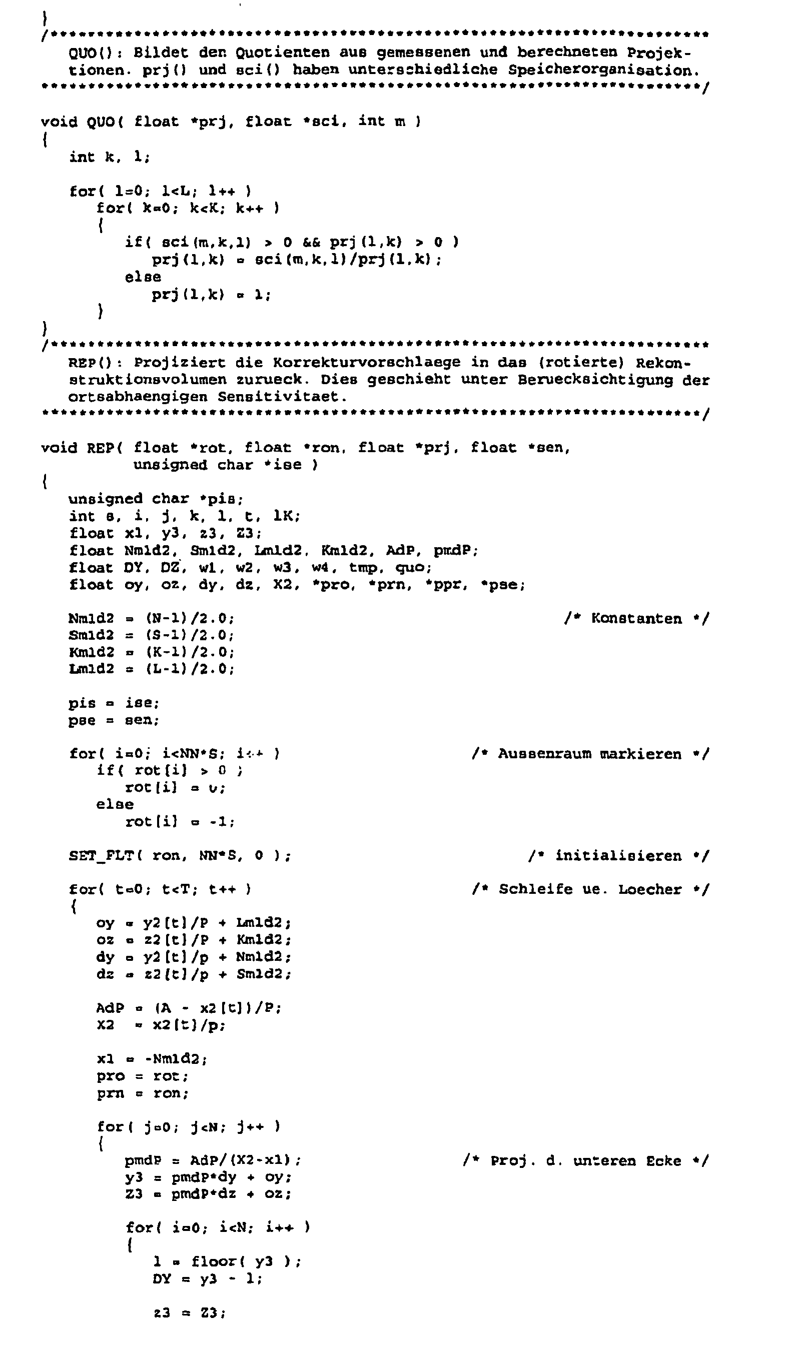

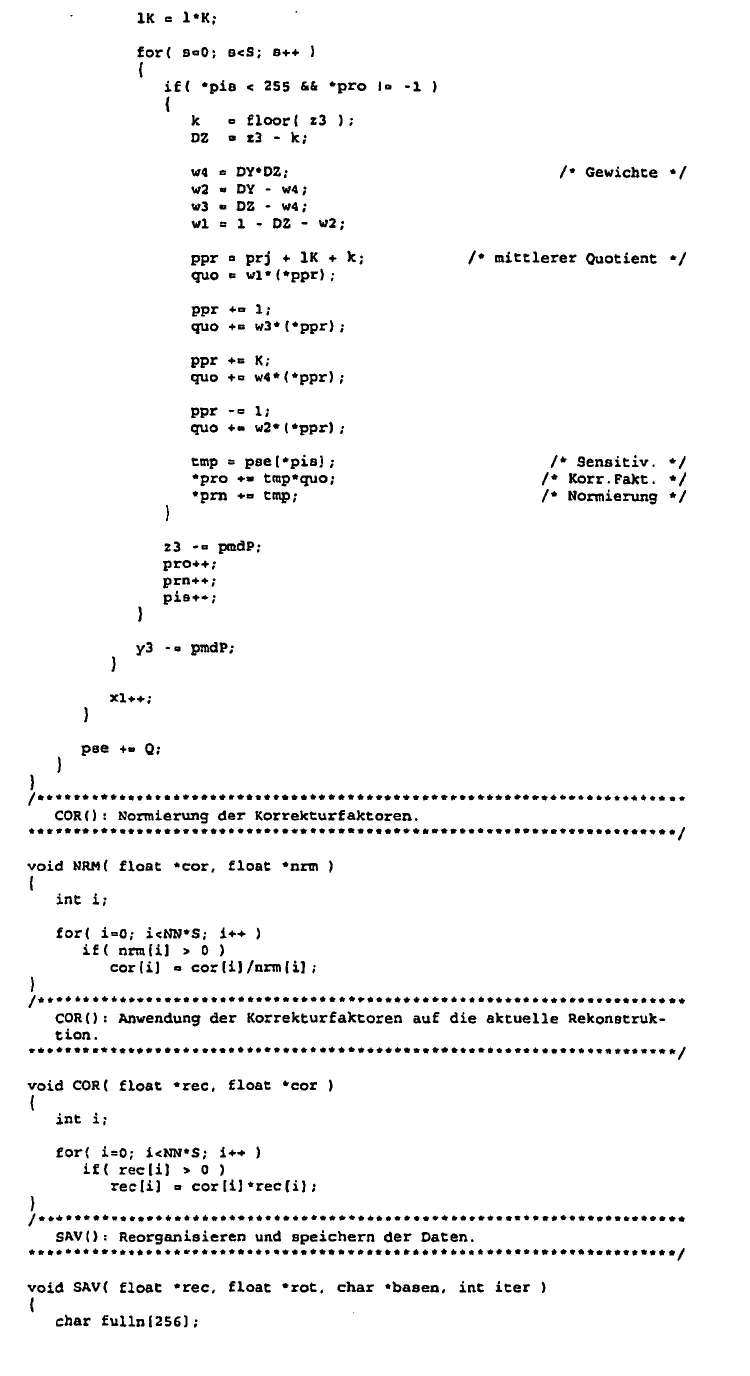

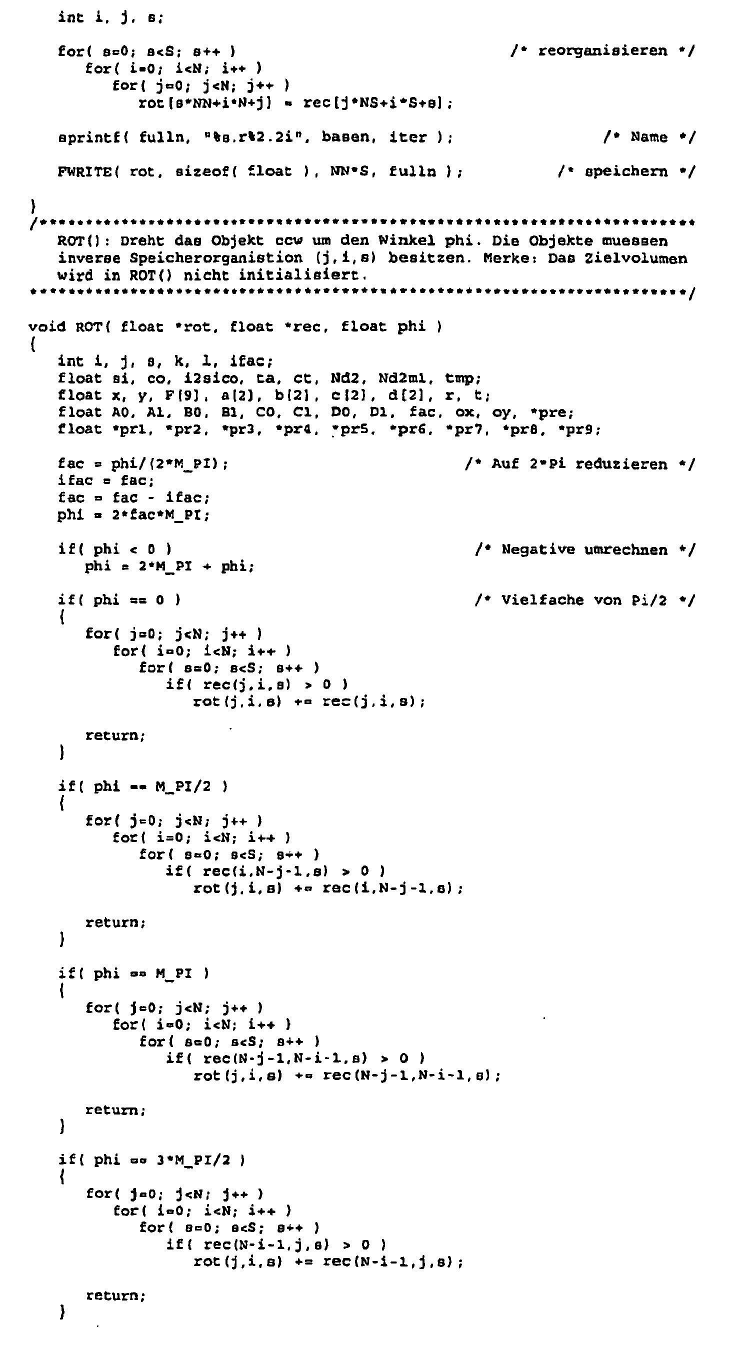

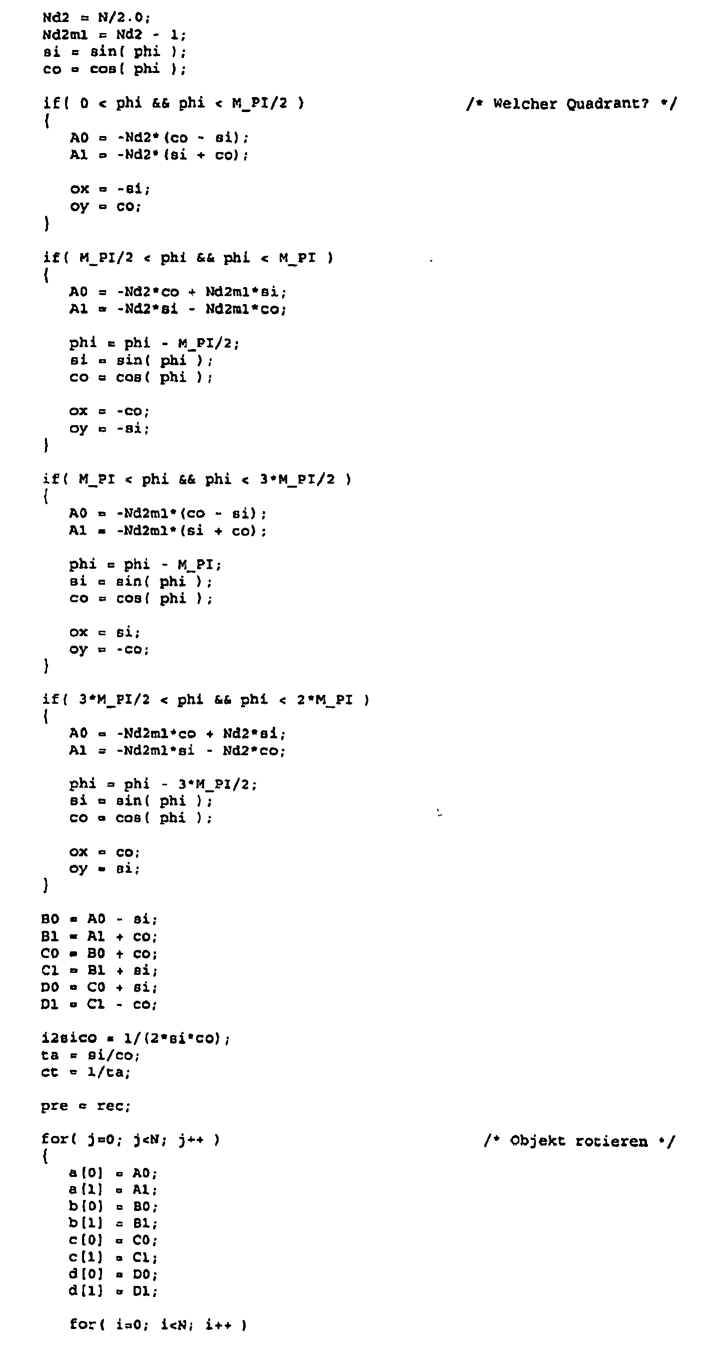

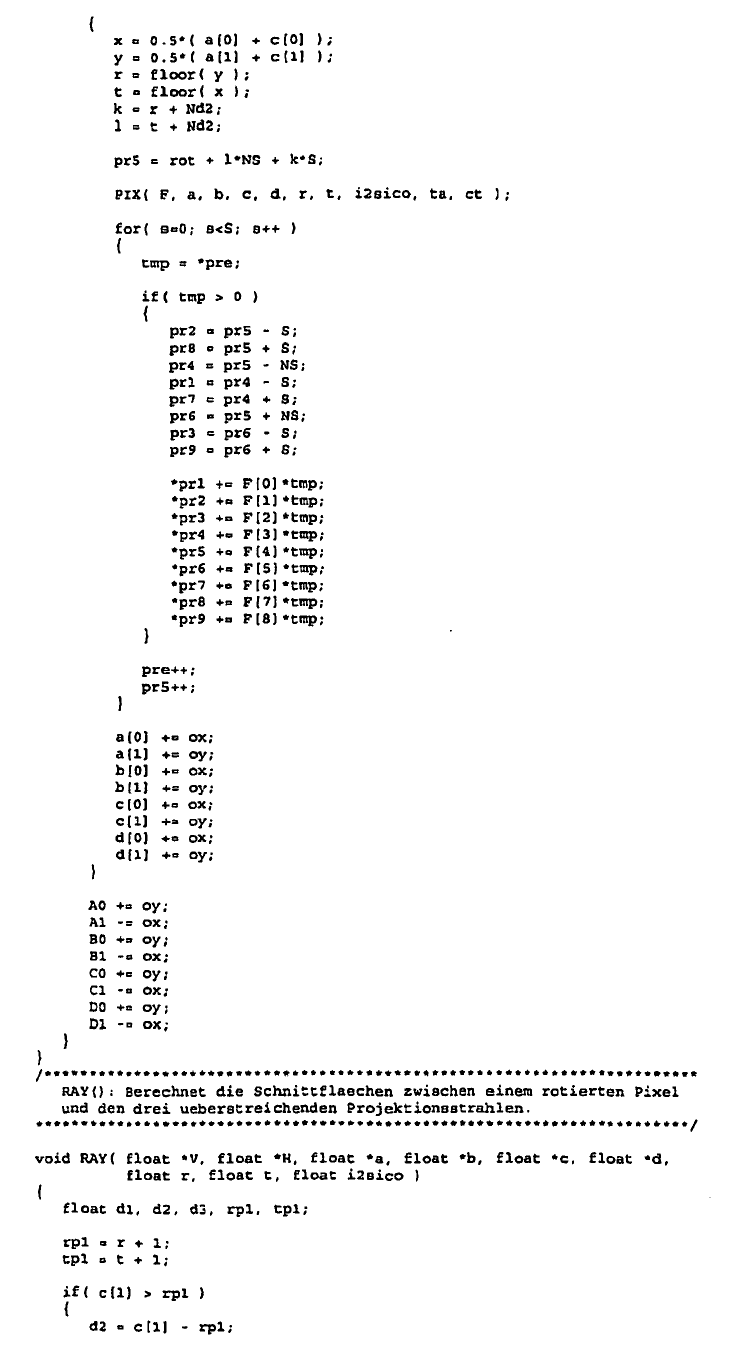

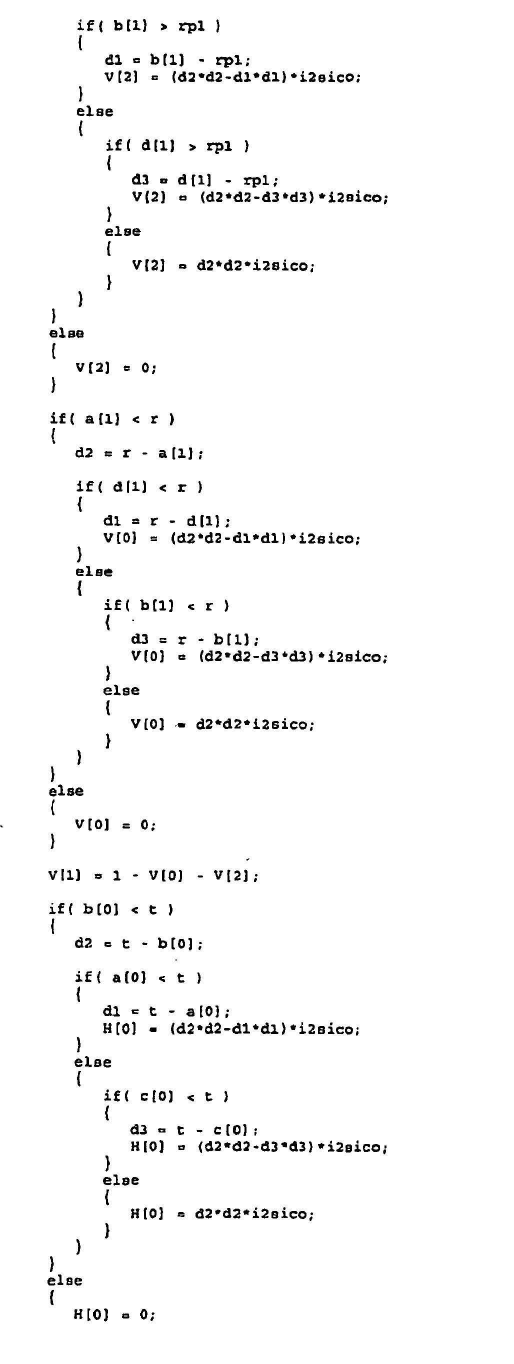

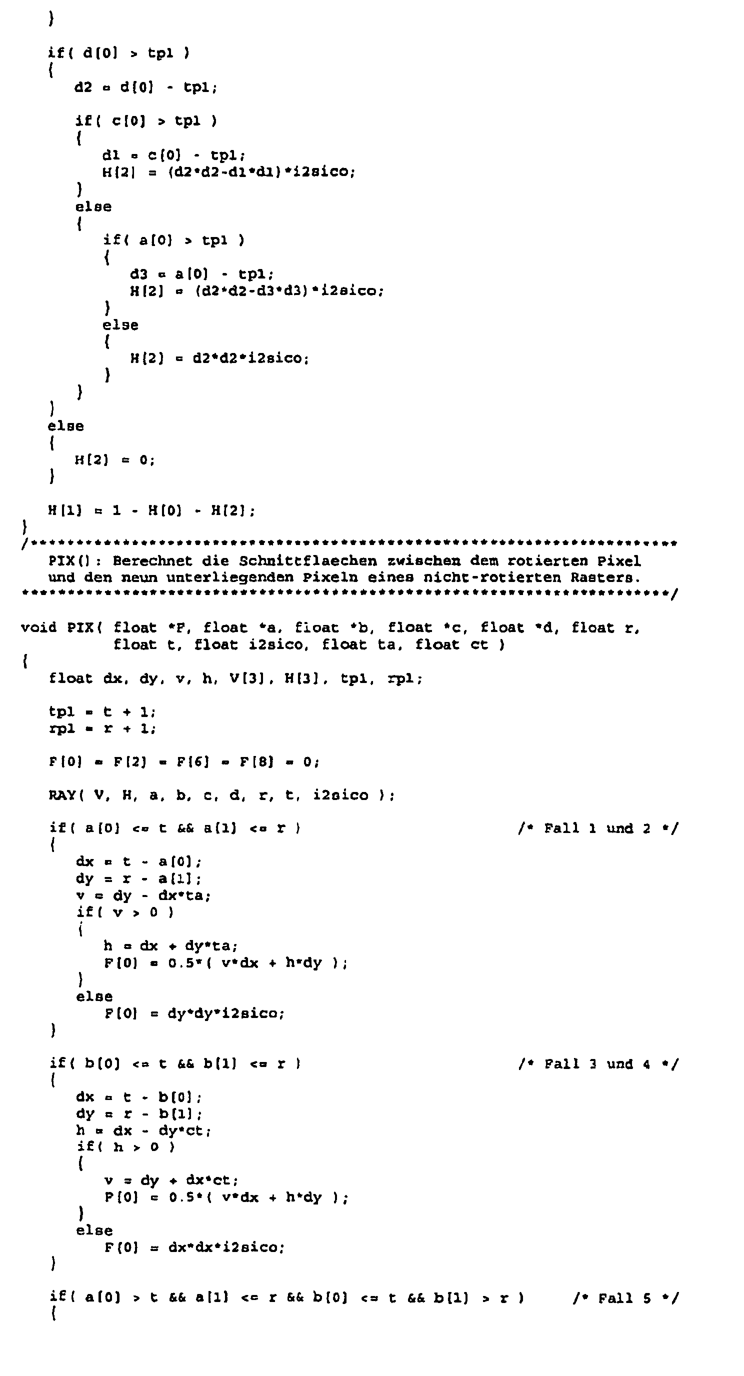

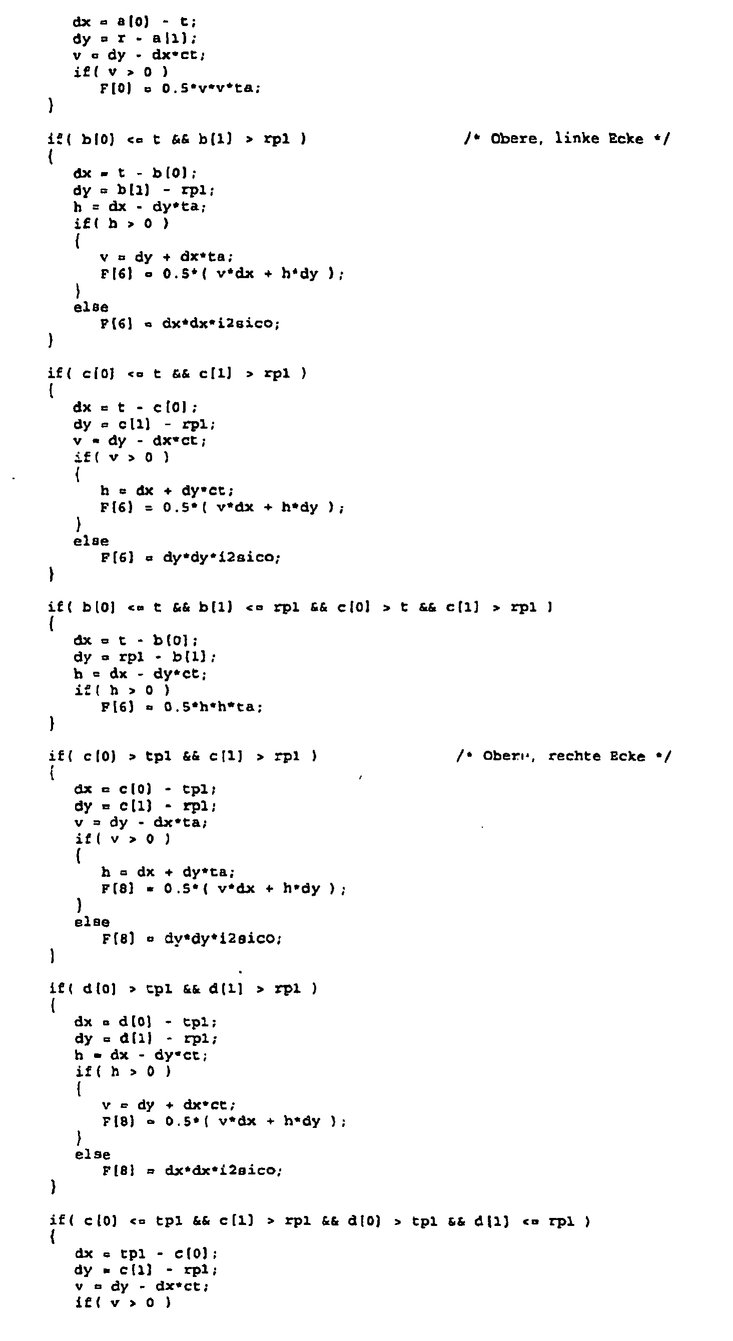

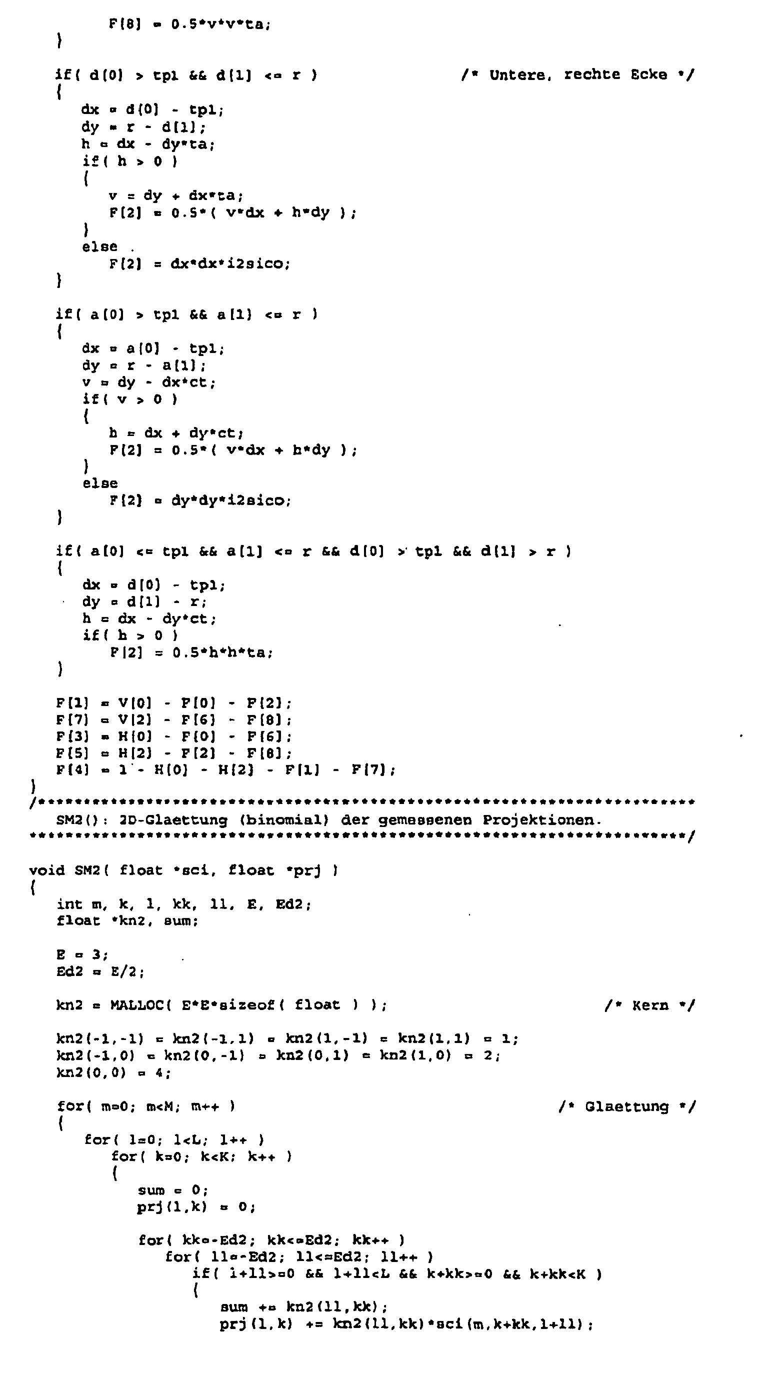

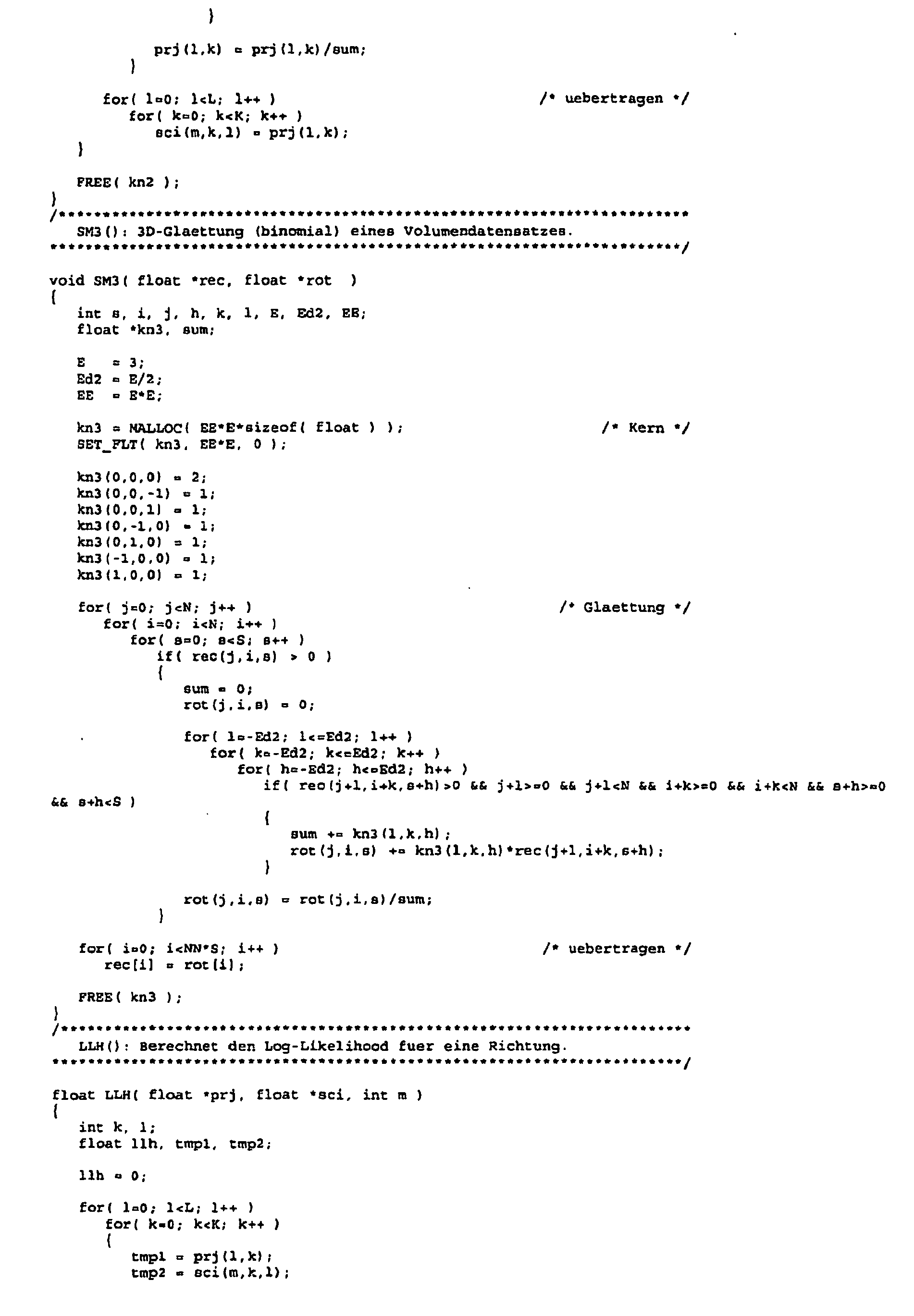

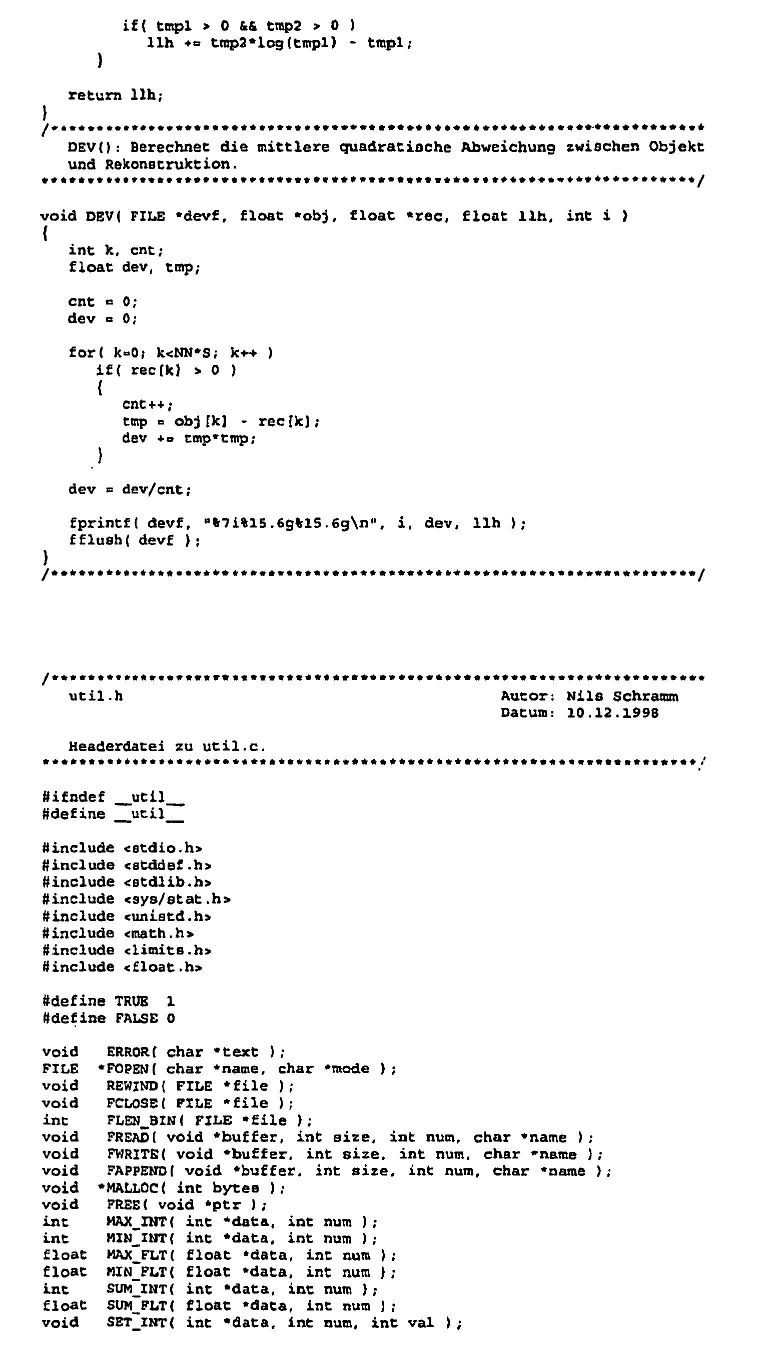

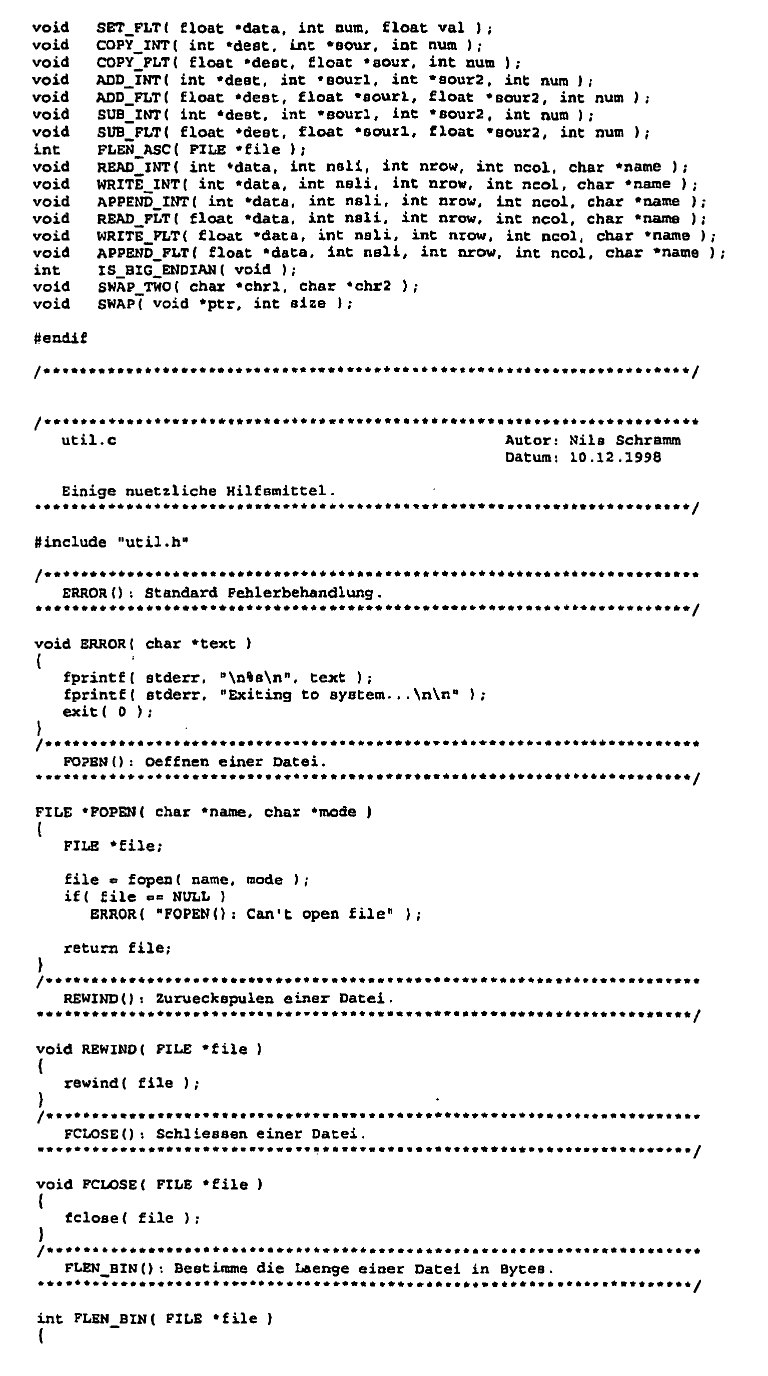

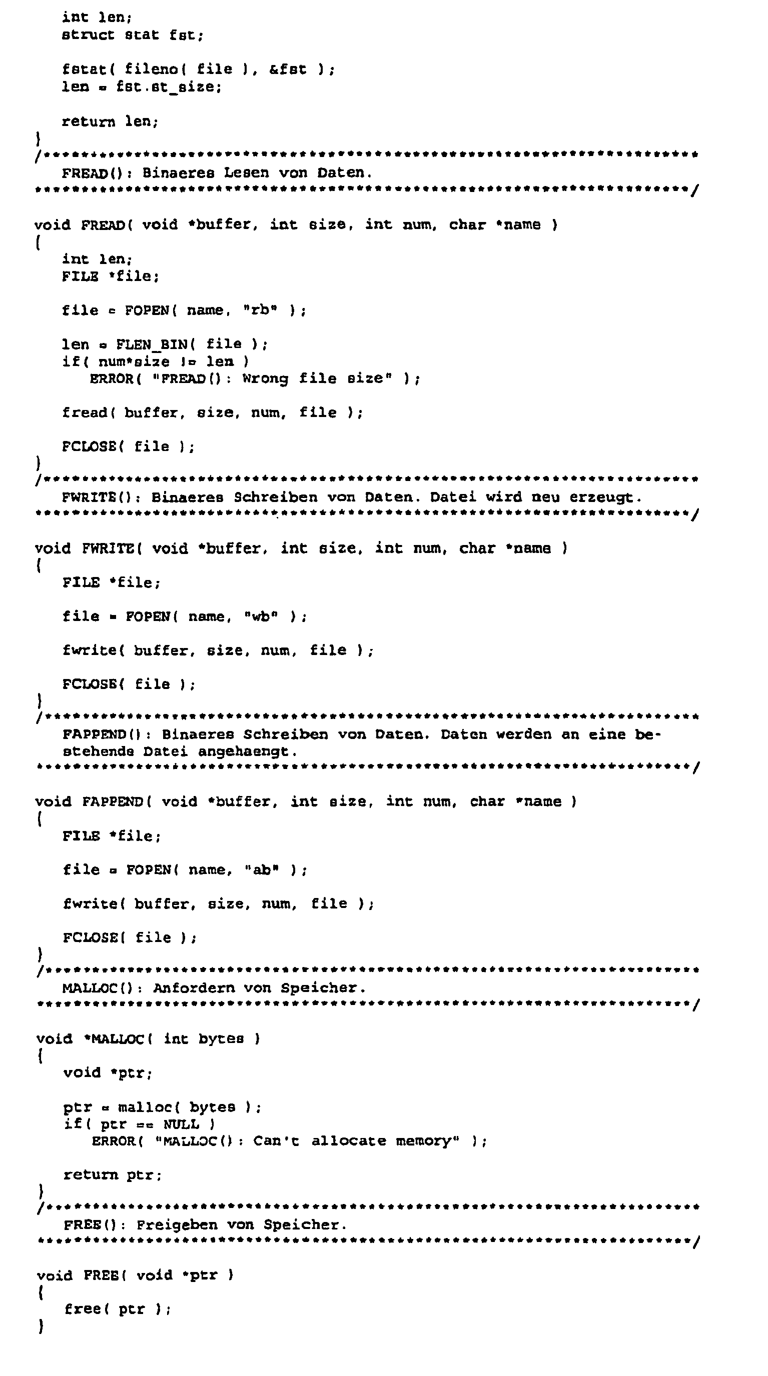

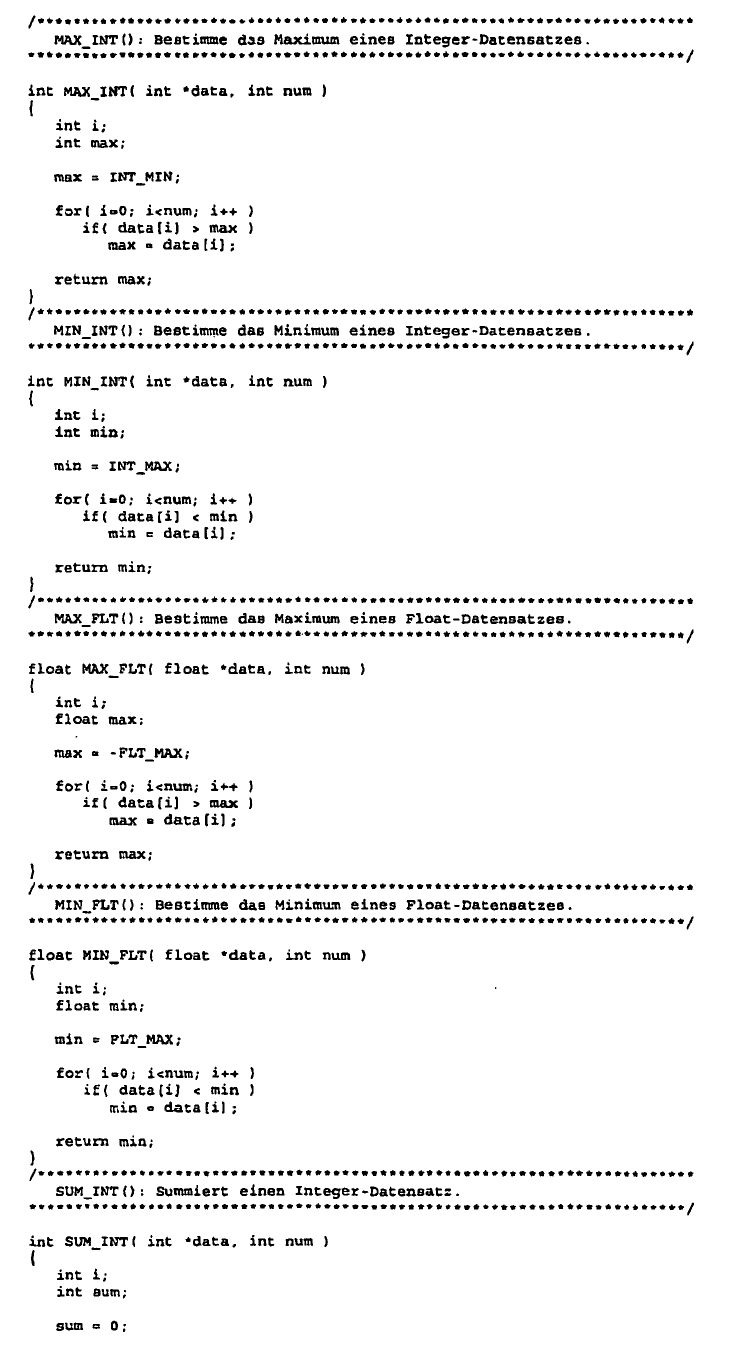

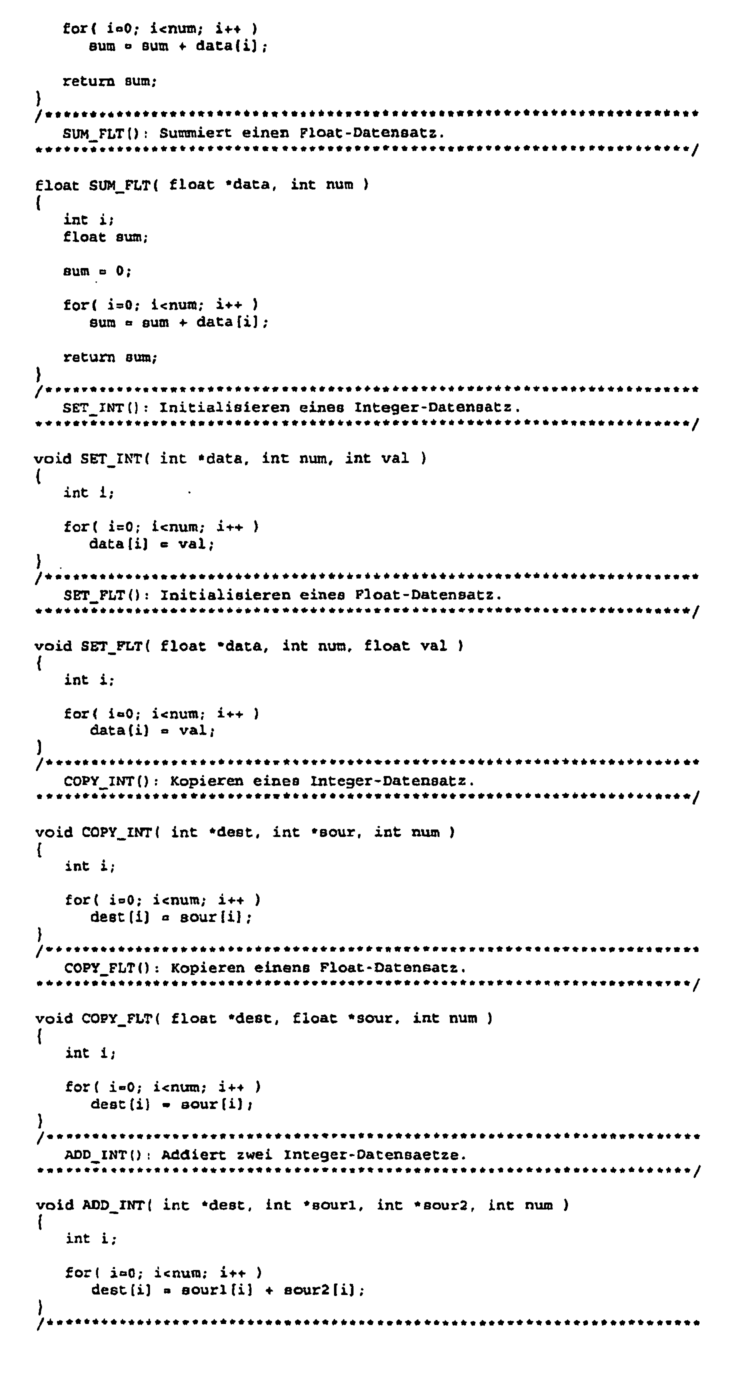

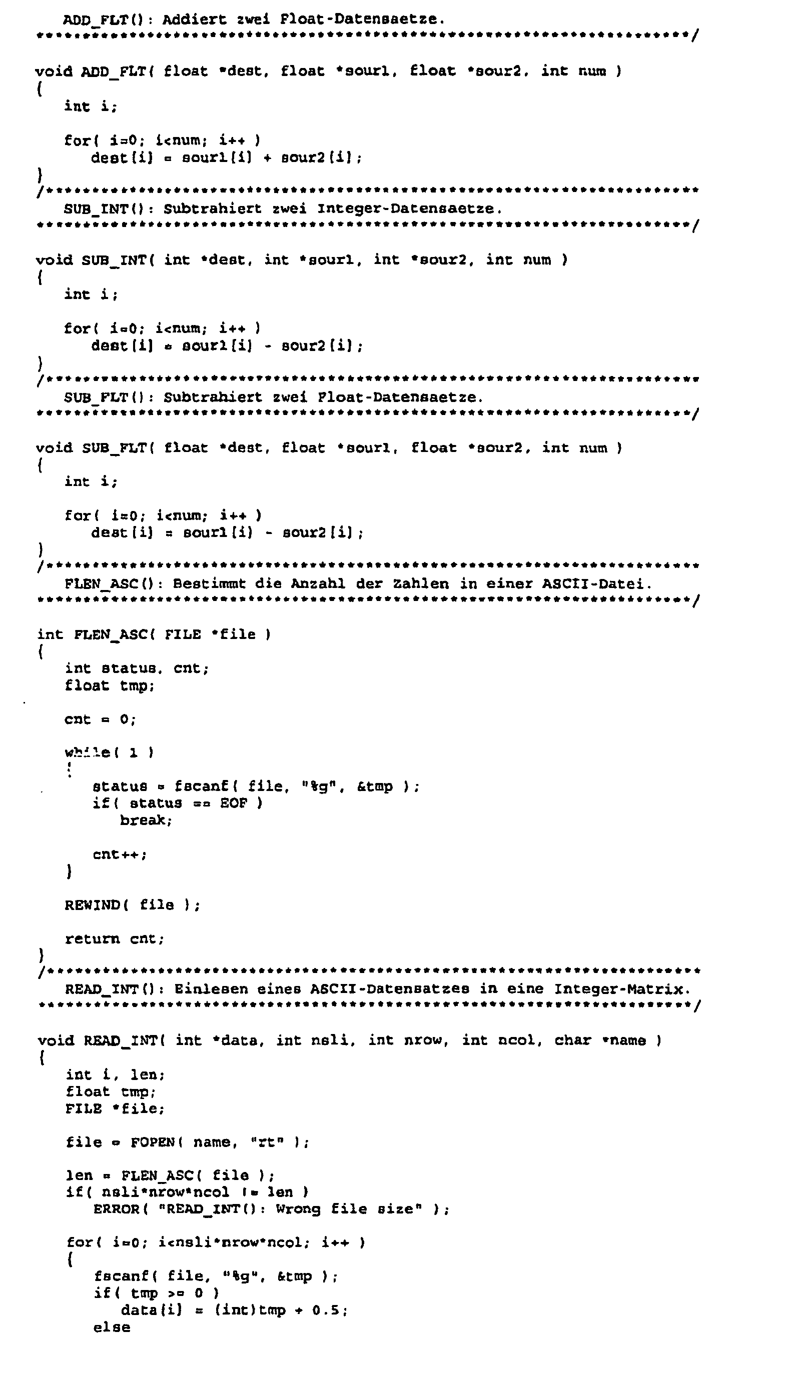

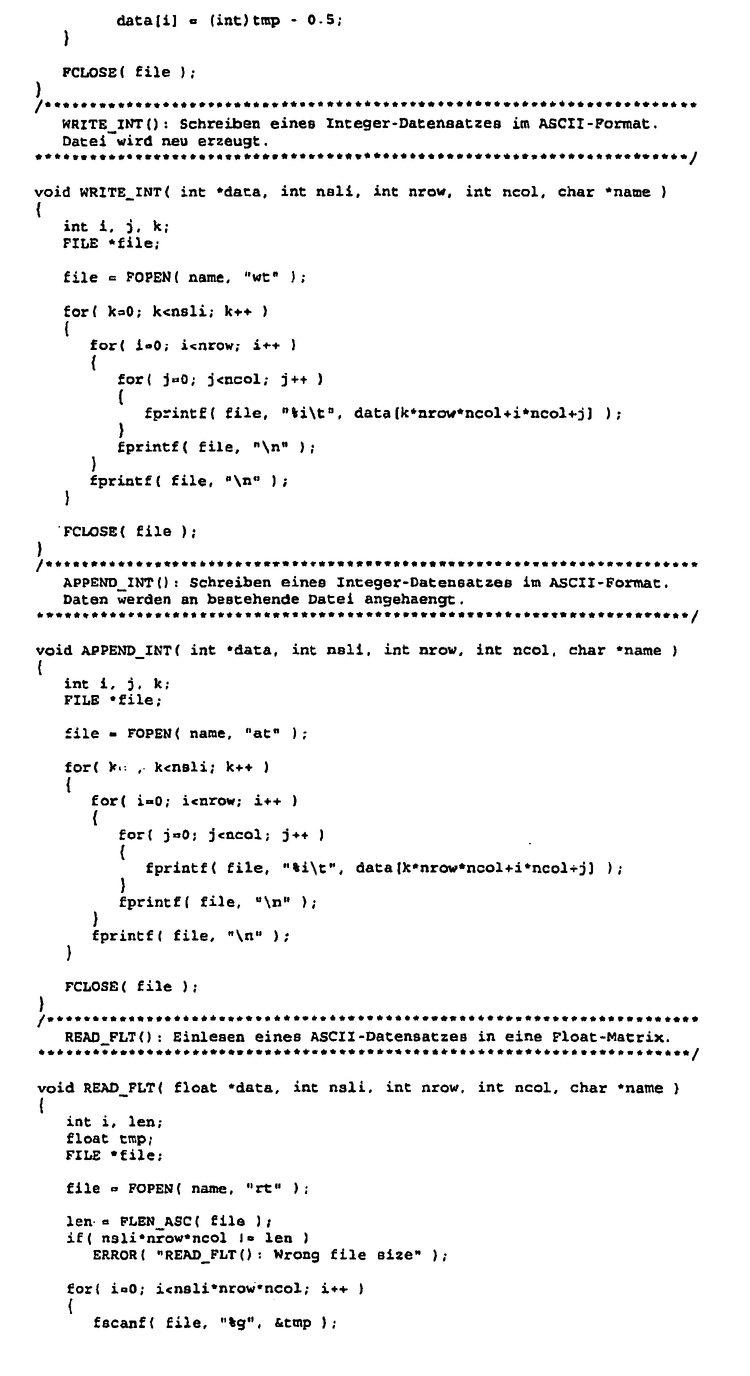

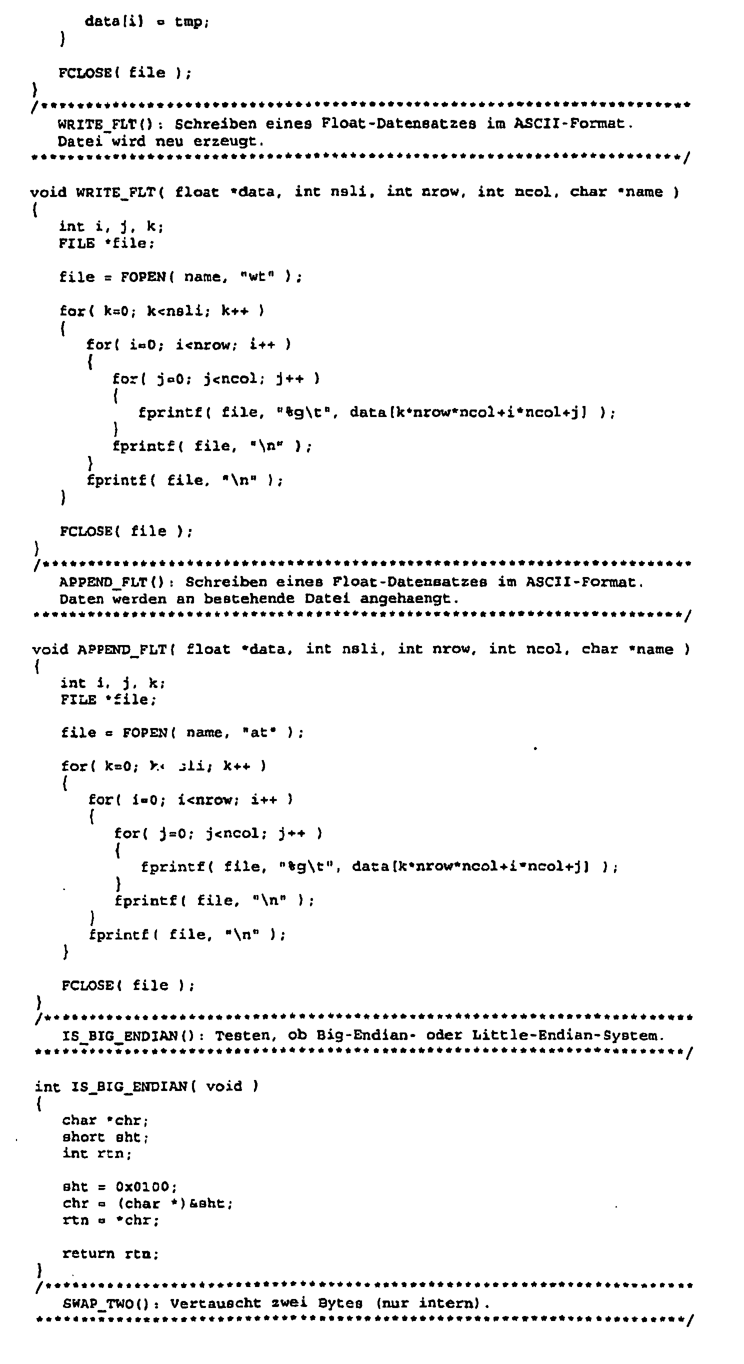

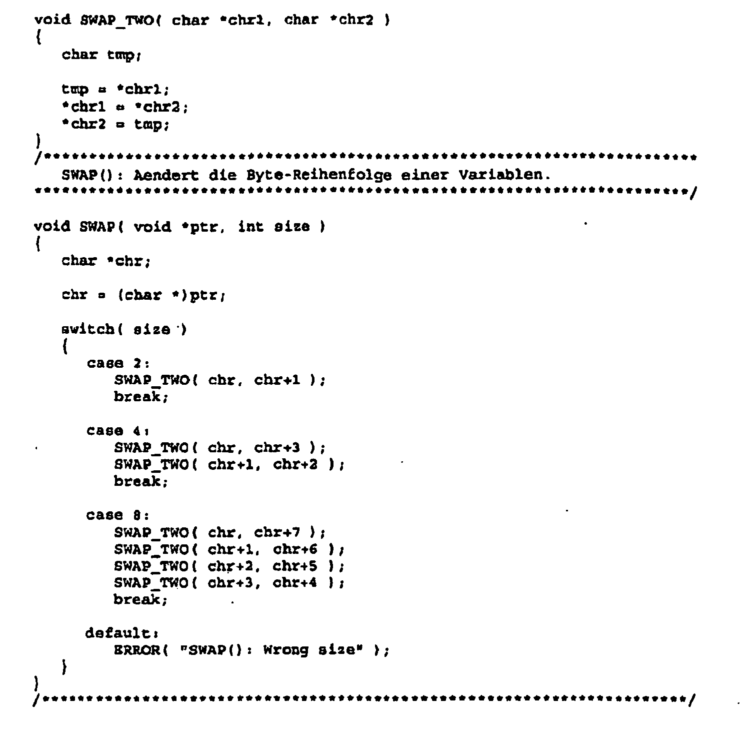

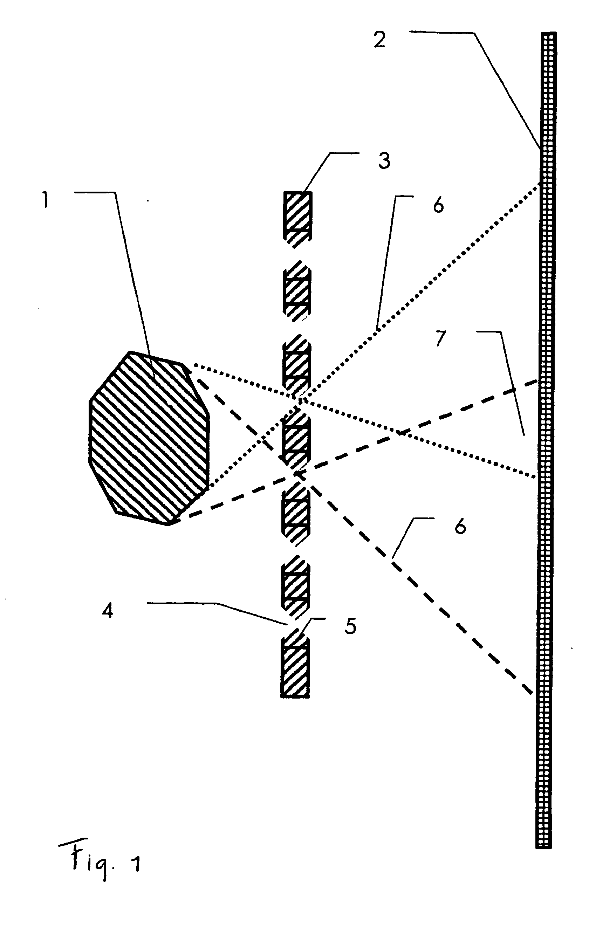

Der grundsätzliche Aufbau der Vorrichtung wird anhand der Figur verdeutlicht.

Ein Objekt 1 befindet sich näher an einem Multi-Pinhole Kollimator 3 als die Detektoroberfläche 2. Der Multi-Pinhole Kollimator 3 weist Löcher 4 auf, die von beiden Seiten trichterförmig in den Kollimator 3 einmünden, um so einen Durchgang von schräg auftreffenden Gammaquanten durch die Löcher zu ermöglichen. Die Spitzen 5 des Multi-Pinhole-Kollimators 3 bestehen aus Iridium. Die übrigen Bereiche des Multi-Pinhole-Kollimators 3 bestehen aus Wolfram. Gammaquanten 6 gelangen vom Objekt 1 durch die Löcher 4 hindurch auf die Detektoroberfläche 2. Das Objekt 1 wird so auf der Detektoroberfläche 2 vergrößert wiedergegeben. Zwischen den einzelnen Kegeln, die durch die Gammaquanten gebildet werden, gibt es Überschneidungsbereiche 7.

In der Figur weisen die Löcher 4 untereinander gleichmäßige Abstände auf. Alternativ können die Abstände auch unregelmäßig sein.

## Patentansprüche

1. Verfahren zur Durchführung eines tomographischen Verfahrens mit einer Vorrichtung mit einem Multi-Pinhole-Kollimator und einem Detektor zur Erfassung von Gammaquanten oder Photonen (6), die von in ein Objekt (1) gebrachten Radiopharmaka ausgesendet werden und durch den Multi-Pinhole-Kollimator (3) hindurchtreten, das Verfahren umfassend:
- Ermitteln der Verteilung der Radiopharmaka in dem Objekt (1) anhand der erfassten Gammaquanten oder Photonen (6) unter Verwendung eines iterativen Rekonstruktionsverfahrens,
**dadurch gekennzeichnet,**
**dass** der Multi-Pinhole-Kollimator eine Vielzahl von Löchern mit jeweiligen Positionen und Neigungen aufweist, und dass das iterative Rekonstruktionsverfahren die ortsabhängige Sensitivität und die ortsabhängige Abbildungsfunktion des Multi-Pinhole-Kollimators (3) mit beliebigen Positionen und Neigungen der Löcher berücksichtigt.

2. Verfahren nach Anspruch 1, wobei die Vorrichtung um das Objekt herum verfahrbar ist.

3. Verfahren nach einem der Ansprüche 1-2, wobei das Rekonstruktionsverfahren die MLEM-Variante der iterativen Multi-Pinhole-Rekonstruktion ist.

4. Verfahren nach einem der Ansprüche 1-3, wobei der Abstand zwischen dem Objekt (1) und dem Multi-Pinhole-Kollimator (3) kleiner ist als der Abstand zwischen dem Multi-Pinhole-Kollimator (3) und der Oberfläche (2) des Detektors.

5. Verfahren nach einem der Ansprüche 1-4, bei dem die Abstände der einzelnen Löcher im Multi-Pinhole-Kollimator (3) so gewählt sind, dass sich die den Löchern zugeordneten Kegel auf der Oberfläche (2) des Detektors teilweise überschneiden.

6. Verfahren nach einem der Ansprüche 1-4, bei dem die Abstände der einzelnen Löcher im Multi-Pinhole-Kollimator (3) sowie die Größe und Lage des Objekts (1) so gewählt sind, dass sich die durch Gammaquanten oder Photonen (6) gebildeten Kegel auf der Oberfläche (2) des Detektors teilweise überschneiden.

7. Verfahren nach einem der Ansprüche 1-6, bei dem die Löcher (4) des Multi-Pinhole-Kollimators (3) trichterförmig in den Multi-Pinhole-Kollimator (3) einmünden.

8. Verfahren nach einem der Ansprüche 1-7, wobei in dem Rekonstruktionsverfahren die Abbildungseigenschaft des Detektors und/oder die detektortypische Ungenauigkeit berücksichtigt wird.

9. Verfahren nach einem der Ansprüche 1-8, wobei der äußere Umriss des Objektes (10) - vorzugsweise über die Compton-Streustrahlung - ermittelt und die Schwächung der Gammaquanten in Abhängigkeit vom Umriss kalkuliert wird.

10. Computerprogramm, umfassend:
- Programmteile zum Ermitteln der Verteilung von Radiopharmaka in einem Objekt (1) anhand von von in das Objekt (1) gebrachten Radiopharmaka ausgesendeten, durch einen Multi-Pinhole-Kollimator (3) hindurchtretenden und mittels eines Detektors erfassten Gammaquanten oder Photonen (6) unter Verwendung eines iterativen Rekonstruktionsverfahrens,
**dadurch gekennzeichnet,**
**dass** der Multi-Pinhole-Kollimator eine Vielzahl von Löchern mit jeweiligen Positionen und Neigungen aufweist, und dass das iterative Rekonstruktionsverfahren die ortsabhängige Sensitivität und die ortsabhängige Abbildungsfunktion des Multi-Pinhole-Kollimators (3) mit beliebigen Positionen und Neigungen der Löcher berücksichtigt.

11. Computerprogramm nach Anspruch 10, wobei das Rekonstruktionsverfahren die MLEM-Variante der iterativen Multi-Pinhole-Rekonstruktion ist.

12. Computerprogramm nach einem der Ansprüche 10-11, wobei in dem Rekonstruktionsverfahren die Abbildungseigenschaft des Detektors und/oder die detektortypische Ungenauigkeit berücksichtigt wird.

13. Vorrichtung, umfassend:
- Mittel zum Ermitteln der Verteilung von Radiopharmaka in einem Objekt (1) anhand von von in das Objekt (1) gebrachten Radiopharmaka ausgesendeten, durch einen Multi-Pinhole-Kollimator (3) hindurchtretenden und mittels eines Detektors erfassten Gammaquanten oder Photonen (6) unter Verwendung eines iterativen Rekonstruktionsverfahrens,
**dadurch gekennzeichnet,**
**dass** der Multi-Pinhole-Kollimator eine Vielzahl von Löchern mit jeweiligen Positionen und Neigungen aufweist, und dass das iterative Rekonstruktionsverfahren die ortsabhängige Sensitivität und die ortsabhängige Abbildungsfunktion des Multi-Pinhole-Kollimators (3) mit beliebigen Positionen und Neigungen der Löcher berücksichtigt.

14. Vorrichtung nach Anspruch 13, wobei die Vorrichtung um das Objekt herum verfahrbar ist.

15. Vorrichtung nach einem der Ansprüche 13-14, wobei das Rekonstruktionsverfahren die MLEM-Variante der iterativen Multi-Pinhole-Rekonstruktion ist.

## Claims

1. A method for carrying out a tomographic method with a device with a multi-pinhole collimator and a detector for detecting gamma quanta or photons (6), which are emitted from radiopharmaceuticals introduced into an object (1) and pass through the multi-pinhole collimator (3), said method comprising:
- determining the distribution of the radiopharmaceuticals in the object (1) on the basis of the detected gamma quanta or photons (6) using an iterative reconstruction method,
**characterised in that**
the multi-pinhole collimator has a plurality of holes with respective positions and inclinations, and **in that** the iterative reconstruction method takes into account the location-dependent sensitivity and the location-dependent mapping function of the multi-pinhole collimator (3) with arbitrary positions and inclinations of the holes.

2. The method according to Claim 1, wherein the device can be moved around the object.

3. The method according to any of the Claims 1-2, wherein the reconstruction method is the MLEM variant of the iterative multi-pinhole reconstruction.

4. The method according to any of the Claims 1-3, wherein the distance between the object (1) and the multi-pinhole collimator (3) is less than the distance between the multi-pinhole collimator (3) and the surface (2) of the detector.

5. The method according to any of the Claims 1-4, wherein the distances between the individual holes in the multi-pinhole collimator (3) are selected such that the cones associated with the holes partly intersect on the surface (2) of the detector.

6. The method according to any of the Claims 1-4, wherein the distances between the individual holes in the multi-pinhole collimator (3) and also the size and position of the object (1) are selected such that the cones formed by gamma quanta or photons (6) partly intersect on the surface (2) of the detector.

7. The method according to any of the Claims 1-6, wherein the holes (4) of the multi-pinhole collimator (3) lead into the multi-pinhole collimator (3) in a funnel-shaped manner.

8. The method according to any of the Claims 1-7, wherein, in the reconstruction method, the mapping property of the detector and/or the detector-typical inaccuracy is/are taken into account.

9. The method according to any of the Claims 1-8, wherein the outer profile of the object (10) is determined, preferably via the Compton scatter radiation, and the attenuation of the gamma quanta is calculated in dependence on the profile.

10. A computer program, comprising:
- program parts for determining the distribution of radiopharmaceuticals in an object (1) on the basis of gamma quanta or photons (6) emitted from radiopharmaceuticals introduced into the object (1), passing through a multi-pinhole collimator (3) and detected by means of a detector, using an iterative reconstruction method,
**characterised in that**
the multi-pinhole collimator has a plurality of holes with respective positions and inclinations, and **in that** the iterative reconstruction method takes into account the location-dependent sensitivity and the location-dependent mapping function of the multi-pinhole collimator (3) with arbitrary positions and inclinations of the holes.

11. The computer program according to Claim 10, wherein the reconstruction method is the MLEM variant of the iterative multi-pinhole reconstruction.

12. The computer program according to any of the Claims 10-11, wherein, in the reconstruction method, the mapping property of the detector and/or the detector-typical inaccuracy is/are taken into account.

13. A device, comprising:
- means for determining the distribution of radiopharmaceuticals in an object (1) on the basis of gamma quanta or photons (6) emitted from radiopharmaceuticals introduced into the object (1), passing through a multi-pinhole collimator (3) and detected by means of a detector, using an iterative reconstruction method,
**characterised in that**
the multi-pinhole collimator has a plurality of holes with respective positions and inclinations, and **in that** the iterative reconstruction method takes into account the location-dependent sensitivity and the location-dependent mapping function of the multi-pinhole collimator (3) with arbitrary positions and inclinations of the holes.

14. The device according to Claim 13, wherein the device can be moved around the object.

15. The device according to any of the Claims 13-14, wherein the reconstruction method is the MLEM variant of the iterative multi-pinhole reconstruction.

## Revendications

1. Procédé de mise en oeuvre d'un procédé tomographique avec un dispositif comportant un collimateur sténopé et un détecteur pour détecter des quantums gamma ou des photons (6), qui sont émis par des produits radiopharmaceutiques introduits dans un objet (1) et passent à travers le collimateur sténopé (3), le procédé comprenant :
- la détermination de la répartition des produits radiopharmaceutiques dans l'objet (1) sur la base des quantums gamma ou des photons (6) détectés en utilisant un procédé de reconstruction itératif,
**caractérisé en ce que**
le collimateur sténopé présente une pluralité de trous avec des positions et inclinaisons respectives, et **en ce que** le procédé de reconstruction itératif prend en compte la sensibilité en fonction de la localisation et la fonction d'imagerie en fonction de la localisation du collimateur sténopé (3) à diverses positions et inclinaisons des trous au choix.

2. Procédé selon la revendication 1, dans lequel le dispositif peut être déplacé autour de l'objet.

3. Procédé selon une des revendications 1 à 2, dans lequel le procédé de reconstruction est la variante MLEM de la reconstruction sténopée itérative.

4. Procédé selon une des revendications 1 à 3, dans lequel l'espacement entre l'objet (1) et le collimateur sténopé (3) est plus petit que l'espacement entre le collimateur sténopé (3) et la surface (2) du détecteur.

5. Procédé selon une des revendications 1 à 4, dans lequel les espacements des trous individuels dans le collimateur sténopé (3) sont sélectionnés de telle sorte que les cônes coordonnés aux trous sur la surface (2) du détecteur se recoupent partiellement.

6. Procédé selon une des revendications 1 à 4, dans lequel les espacements des trous individuels dans le collimateur sténopé (3) ainsi que la taille et la position de l'objet (1) sont sélectionnés de telle sorte que les cônes formés par les quantums gamma ou les photons (6) sur la surface (2) du détecteur se recoupent partiellement.

7. Procédé selon une des revendications 1 à 6, dans lequel les trous (4) du collimateur sténopé (3) débouchent en forme d'entonnoir dans le collimateur sténopé (3).

8. Procédé selon une des revendications 1 à 7, dans lequel, dans le procédé de reconstruction, la propriété d'imagerie du détecteur et/ou l'imprécision typique du détecteur est prise en compte.

9. Procédé selon une des revendications 1 à 8, dans lequel le contour extérieur de l'objet (10) est déterminé - de préférence par l'intermédiaire du rayonnement diffus de Compton- et l'atténuation des quantums gamma est calculé en fonction du contour.

10. Programme informatique, comprenant :
- des parties de programme pour déterminer la répartition des produits radiopharmaceutiques dans un objet (1) sur la base des quantums gamma ou des photons (6) émis par les produits radiopharmaceutiques introduits dans l'objet (1), passant à travers un collimateur sténopé (3) et détectés au moyen d'un détecteur en utilisant un procédé de reconstruction itératif,
**caractérisé en ce que**
le collimateur sténopé présente une pluralité de trous avec des positions et inclinaisons respectifs, et **en ce que** le procédé de reconstruction itératif prend en compte la sensibilité en fonction de la localisation et la fonction d'imagerie du collimateur sténopé (3) en fonction de la localisation à diverses positions et inclinaisons des trous au choix.

11. Programme informatique selon la revendication 10, dans lequel le procédé de reconstruction est la variante MLEM de la reconstruction sténopée itérative.

12. Programme informatique selon une des revendications 10 à 11, dans lequel, dans le procédé de reconstruction, la propriété d'imagerie du détecteur et/ou l'imprécision typique du détecteur est prise en compte.

13. Dispositif, comprenant :
- des moyens pour déterminer la répartition des produits radiopharmaceutiques dans un objet (1) sur la base des quantums gamma ou des photons (6) émis par des produits radiopharmaceutiques introduits dans l'objet (1), passant à travers un collimateur sténopé (3) et détectés au moyen d'un détecteur en utilisant un procédé de reconstruction itératif,
**caractérisé en ce que**
le collimateur sténopé présente une pluralité de trous avec des positions et inclinaisons respectives, et **en ce que** le procédé de reconstruction itératif prend en compte la sensibilité en fonction de la localisation et la fonction d'imagerie en fonction de la localisation du collimateur sténopé (3) avec diverses positions et inclinaisons des trous au choix.

14. Dispositif selon la revendication 13, dans lequel le dispositif peut être déplacé autour de l'objet.

15. Dispositif selon une des revendications 13-14, dans lequel le procédé de reconstruction est la variante MLEM de la reconstruction sténopée itérative.
